# EUROPÄISCHE PATENTANMELDUNG

(11) **EP 3 387 890 A1**
(43) Veröffentlichungstag der Anmeldung: **17.10.2018**
(21) Anmeldenummer: 18166424.4
(22) Anmeldetag: 09.04.2018
(51) Int. Cl.: A01B 39/18, A01B 39/08, A01B 23/02, A01B 79/00

(54) **REIHENEINHEIT ZUR MECHANISCHEN UNKRAUTBEKÄMPFUNG, LANDWIRTSCHAFTLICHE MASCHINE MIT WENIGSTENS ZWEI DERARTIGEN REIHENEINHEITEN SOWIE VERFAHREN ZUR MECHANISCHEN UNKRAUTBEKÄMPFUNG**

(30) Priorität: 13.04.2017 DE 102017108135
(71) Anmelder: Horsch Maschinen GmbH, 92421 Schwandorf (DE); Böhner, Hartmut, 33165 Lichtenau (DE)
(72) Erfinder: BÖHNER, Hartmut, 33165 Lichtenau (DE)
(74) Vertreter: Benninger, Johannes

(57) **Zusammenfassung**

Es ist eine Reiheneinheit (14) zur mechanischen Unkrautbekämpfung von in Pflanzenreihen (12) stehenden Kulturpflanzen offenbart, die zumindest ein neben der Pflanzenreihe angeordnetes Lockerungselement (30) sowie einen in einem Winkel α zur Pflanzenreihe (12) angeordneten Rotor (34) umfasst.

Es ist zudem eine landwirtschaftliche Maschine (10) zur mechanischen Unkrautbekämpfung von in Pflanzenreihen (12) stehenden Kulturpflanzen offenbart, welche einen Rahmen (18) zum Tragen der jeweiligen Reiheneinheiten (14) und/oder Werkzeuge (16), ein Tiefenführungselement (26) zur konstanten Tiefenführung der Reiheneinheiten (14) und/oder Werkzeuge (16) sowie zwei Reiheneinheiten (14), bestehend aus einem neben der Pflanzenreihe (12) angeordnetem Lockerungselement (30), sowie einem, in einem Winkel α zur Pflanzenreihe (12) angeordneten Rotor (34) umfasst.

Um eine verbesserte mechanische Unkrautbekämpfung zu erreichen, ist jeweils vorgesehen, dass der Rotor (34) mittels eines motorischen Antriebes (42) in Rotation gebracht wird, wobei die Drehzahl und/oder die Drehrichtung (44) auf Basis verschiedenster Parameter (48) variabel veränderbar ist/sind.

Zudem ist ein Verfahren zur mechanischen Unkrautbekämpfung von in Pflanzenreihen (12) stehenden Kulturpflanzen offenbart.

## Beschreibung

Die vorliegende Erfindung betrifft eine Reiheneinheit zur mechanischen Unkrautbekämpfung mit den Merkmalen des unabhängigen Anspruchs 1, eine landwirtschaftliche Maschine mit zumindest zwei derartigen Reiheneinheiten mit den Merkmalen des unabhängigen Anspruchs 10, sowie ein Verfahren zur mechanischen Unkrautbekämpfung mit den Merkmalen des unabhängigen Anspruchs 19.

In der Landwirtschaft ist es für viele Kultur- bzw. Nutzpflanzen wie bspw. Mais, Zuckerüben, Soja, aber auch bei Gemüsepflanzen üblich, diese Pflanzen in jeweils voneinander in definierten Abständen angeordneten Pflanzenreihen anzubauen. Ebenso können auch die Kulturpflanzen in den Pflanzenreihen wiederum in definierten bzw. in regelmäßigen Abständen zueinander angeordnet sein, wobei die Abstände sowohl zwischen den Pflanzenreihen als auch in den Pflanzenreihen von der jeweiligen Art der Kulturpflanze abhängig sind. In den so entstehenden Freiräumen kann sich jedoch sog. Unkraut, wie Gräser oder dergl. bilden, welche das Wachstum der Kulturpflanzen beeinträchtigen können. Um das Unkraut zu entfernen, gibt es generell zwei Vorgehensweisen: zum einen eine chemische Behandlung der jeweiligen landwirtschaftlichen Fläche, wobei hierbei chemische Mittel mittels einer Pflanzenschutzspritze auf der Fläche bzw. den Pflanzen verteilt werden. Derartige Verfahren können jedoch insbesondere in der ökologischen Landwirtschaft nicht verwendet werden; auch können derartige Verfahren bzw. derartige chemische Mittel mitunter sehr teuer sein und zudem die Umwelt schädigen. Eine weitere Vorgehensweise ist die mechanische Unkrautbekämpfung: bei dieser wird mit verschiedensten Maschinen und Werkzeugen versucht, das Unkraut ohne Einsatz von chemischen Mitteln zu entfernen bzw. dessen Wachstum zu unterbinden.

Eine derartige landwirtschaftliche Maschine zur mechanischen Unkrautbekämpfung geht aus der DE 1 789 060 U bereits hervor. Die Maschine besteht aus einem sog. Hackschar, welches den Boden neben einer Pflanzenreihe lockert und Unkraut entfernt sowie aus einem oder mehreren rotierenden Bearbeitungswerkzeugen in Form von Zinkenrotoren bzw. in Form von Federzinkensternen, die unter einem Winkel α zur Fahrrichtung über die Pflanzenreihe selbst hinwegrollend, d.h. bodenangetrieben geführt sind und nur mit Eigengewicht und einem einstellbaren Federdruck oder einem Zusatzgewicht gegen den Boden drücken, wobei die Zinken der sich drehenden Federzinkensterne in den Boden einstechen, ihn lockern, Unkrautpflänzchen herausreißen oder bedecken und ohne die Nutzpflanze zu schädigen über diese selbst hinwegrollen sollen. Praxisversuche mit einer derartigen landwirtschaftlichen Maschine haben jedoch gezeigt, dass mit dieser bzw. einer sich aus dem Hackschar und einem Zinkenrotor zusammengesetzten Maschine mit unter keine ausreichende Unkrautbekämpfung erreicht wird, da das Unkraut mittels des Hackschar jeweils nur auf einer Seite der Reiheneinheit entfernt, sowie der Boden jeweils nur auf einer Seite gelockert wird, was insbesondere bei größeren Reihenabständen nicht ausreichend ist. Des Weiteren sind durch den Bodenantrieb sowohl eine Rotationsgeschwindigkeit bzw. eine Drehzahl sowie eine Drehrichtung des Zinkenrotors nicht verstellbar, so dass dieser nicht auf veränderte Anforderungen wie bspw. einen größeren Unkrautbestand eingestellt werden kann. Auch muss für einen sicheren und gleichmäßigen Bodenantrieb eine entsprechende Kraft auf den Zinkenrotor wirken, da dieser sonst ggf. nicht ausreichend angetrieben wird, wobei diese Kraft aber auch nicht zu groß sein darf, da ansonsten die Nutzpflanzen beschädigt werden könnten, was jedoch in der Praxis aufgrund sich ändernder Bodenbedingungen regelmäßig vorkommt.

Eine weitere landwirtschaftliche Maschine zur mechanischen Unkrautbekämpfung ist in der DE 203 08 814 U1 beschrieben. Um hier eine möglichst effektive Unkrautbekämpfung auch unter ungünstigen Standortbedingungen zu erreichen, ist eine Kombination eines parallelogrammgeführten Hackschares mit einem nachlaufenden Zinkenrotor vorgesehen, wobei der Zinkenrotor mit seinem Achsmittelpunkt nicht direkt über der Pflanzenreihe sondern in einem Versatz von einem bis drei Zentimetern zu dieser arbeitet. Auch diese landwirtschaftliche Maschine weist jedoch nur ein Hackschar sowie einen, für den Zinkenrotor vorgesehenen Bodenantrieb mit den bereits unter der DE 1 789 060 U beschriebenen Nachteilen auf.

Eine Ausführungsform einer landwirtschaftlichen Maschine mit einem angetriebenen Zinkenrotor geht aus der US 2 182 157 hervor. Die Maschine sieht hierbei eine Kombination aus einem Hackschar mit einem motorisch angetriebenen Zinkenrotor vor, wodurch eine verbesserte mechanische Unkrautbekämpfung erzielt werden soll. Der Zinkenrotor ist über eine parallel zur Fahrtrichtung geführte Welle gelagert, wobei jedoch wiederum dessen Zinken jeweils Senkrecht zu dieser Welle geführt werden. Eine Variation der Drehzahl und/oder Drehrichtung sowie eine Anpassung der Ausrichtung des Zinkenrotors sind jedoch nicht möglich, wodurch auch mit dieser landwirtschaftlichen Maschine keine ausreichende Arbeitsqualität erreicht wird.

Eine Ausführungsvariante einer Fingerhacke bzw. eines Zinkenrotors geht aus der EP 1 127 481 B1 hervor. Um einen besonders großen Jäteffekt sowie um eine einfache Wechselbarkeit von verschlissenen Bauteilen zu erreichen, ist eine bodenangetriebene Fingerhacke vorgesehen, die aus Kunststoff oder Metall gefertigt ist. Zudem sollen elastische Dämpfungselemente in der Aufhängung für eine längere Standzeit des Zinkenrotors sorgen. Des Weiteren ist die Lagerung des Zinkenrotors in den Grundkörper dieses integriert. Da der Zinkenrotor jedoch über dessen Umfang nur jeweils einen Ring an Zinken bzw. Hackelementen aufweist, ist mittels diesem wiederum der Effekt der Unkrautbekämpfung beschränkt.

Darüber hinaus benötigen die aus dem Stand der Technik bekannten Reiheneinheiten bzw. landwirtschaftlichen Maschinen zur exakten Führung dieser entlang einer Pflanzenreihe, insbesondere bei größeren Arbeitsbreiten, Lenksysteme, welche Lenksysteme auf Basis teurer Kamera- und Sensorsysteme entsprechend angesteuert und gelenkt werden, wodurch derartige Reiheneinheiten bzw. landwirtschaftliche Maschinen in deren Anschaffungspreis sehr hoch sind. Auch sind derartige Lenksysteme relativ wartungsintensiv und können bei einer nicht exakten Justierung zu einer Beschädigung der Nutzpflanzen in den Pflanzenreihen führen.

Aus der DE 298 07 777 U1 geht eine weitere Vorrichtung zur mechanischen Unkrautbekämpfung aus Anlagen von in Beeten angeordneten Kulturpflanzen mit Hilfe an einem Fahrwerk befestigter, auf den Boden einwirkender, um eine Achse rotierender Elemente, hervor. An dem Fahrwerk befindet sich eine den Boden anhebende Schar, wobei die Schar verstellbar ausgebildet ist. An der Achse sind Federzinken angeordnet, die auf den angehobenen Boden einwirken und diesen aufschleuderrn. Im Flugweg des aufgeschleuderten Bodens befindet sich ein Prallvorhang, an welchem die Pflanzen von anhaftenden Bodenteilen separiert werden. Die rotierenden Elemente sind mit einer Abdeckung versehen, die ein Aufschleudern von Pflanzen- und Bodenteilen über den Prallvorhang hinaus verhindert.

Eine weitere landwirtschaftliche Maschine zur Unkrautbekämpfung geht aus der US 4 114 697 A hervor. Der Grubber umfasst einen rechteckigen Rahmen, welcher über eine Dreipunktaufhängung mit einem Zugfahrzeug beispielsweise in Form eines Traktors verbunden werden kann. Der Grubber umfasst jeweils eine Gruppe von Federzinkensterne, welche jeweils an einer rotierenden Achse befestigt sind. Die rotierende Achse ist mittels einer Klemme am Rahmen verbunden.

Angesichts der aus dem Stand der Technik bekannten Reiheneinheiten und landwirtschaftlichen Maschinen zur mechanischen Unkrautbekämpfung kann das vorrangige Ziel der vorliegenden Erfindung darin gesehen werden, eine Reiheneinheit und eine landwirtschaftliche Maschine zur mechanischen Unkrautbekämpfung sowie ein Verfahren zur mechanischen Unkrautbekämpfung zu schaffen, mittels derer die aus dem Stand der Technik bekannten Nachteile beseitigt sowie eine verbesserte mechanische Unkrautbekämpfung erreicht wird/werden.

Diese Ziele werden mit den Gegenständen der unabhängigen Ansprüche erreicht. Merkmale vorteilhafter Weiterbildungen der Erfindung lassen sich den abhängigen Ansprüchen entnehmen. So schlägt die Erfindung zur Erreichung zumindest einiger der genannten Ziele eine Reiheneinheit mit den Merkmalen des unabhängigen Anspruchs 1 vor. Die erfindungsgemäße Reiheneinheit dient in erster Linie der mechanischen Unkrautbekämpfung von in Pflanzenreihen stehenden Kultur- bzw. Nutzpflanzen, bei welchen Nutzpflanzen es sich insbesondere um Reihenkulturen wie Mais, Zuckerrüben, Soja, und Getreide, jedoch auch um Gemüse oder dergl. Nutzpflanzen handeln kann. Die Reiheneinheiten können an einer landwirtschaftlichen Maschine angebaut werden. Auch kann eine Mehrzahl derartiger Reiheneinheiten an einer landwirtschaftlichen Maschine angebracht sein. Mittels der Reiheneinheiten kann jeweils ungewünschtes, das Wachstum der Nutzpflanzen beeinträchtigendes Unkraut, wie bspw. Gräser und Beikraut, aus den Pflanzenreihen bzw. zwischen den Pflanzenreihen entfernt werden, ohne hierfür chemische Pflanzenschutzmittel zu benötigen.

Zur mechanischen Unkrautbekämpfung weist die Reiheneinheit verschiedene Werkzeuge auf, welche an einem gemeinsamen Träger montiert sein können, welcher Träger sowohl den Rahmen einer landwirtschaftlichen Maschine bilden kann, aber auch an den Rahmen einer landwirtschaftlichen Maschine angebaut sein kann. Auch kann der Rahmen höhenverstellbar gegenüber der landwirtschaftlichen Maschine ausgebildet sein. In Bezug auf eine Fahrtrichtung sind der Reiheneinheit in einem vorderen Bereich zunächst Lockerungselemente zugeordnet, wobei jeweils zumindest ein Lockerungselement neben einer Pflanzenreihe angeordnet ist, insbesondere jedoch ist jeweils links und rechts neben der Pflanzenreihe ein Lockerungselement angeordnet, um somit die Ackerfläche auch bei größeren Reihenabständen möglichst ganzflächig zu lockern und Unkraut möglichst ganzflächig zu entfernen, sowie dieses beidseitig zur Pflanzenreihe zu entfernen, wobei diese einen Abstand zueinander aufweisen können, dass diese zwar möglichst nahe an der Pflanzenreihe entlang geführt werden können, jedoch die Nutzpflanzen in der Pflanzenreihe nicht beschädigt werden. Auch können die Lockerungselemente zwei- oder mehrreihig sowie nebeneinander und/oder zueinander versetzt angeordnet sein, wobei auch hierbei die Lockerungselemente zueinander wiederum gleiche Abstände aber auch verschiedene Abstände aufweisen können. Auch können nur einer Seite der Pflanzenreihe eine oder mehr, Lockerungselemente zwei oder mehrreihig sowie nebeneinander und/oder zueinander versetzt, zugeordnet sein, wobei die Lockerungselemente jeweils so aufgebaut sind, dass mittels dieser der Ackerboden gelockert und aufgebrochen wird und somit zum einen Unkraut bzw. ungewünschte Pflanzen entfernt bzw. entwurzelt werden sowie der Ackerboden so gelockert wird, dass die Nutzpflanzen eine entsprechend gelockerte Bodenstruktur zur Verfügung haben, wodurch deren Wachstum verbessert wird.

Die Lockerungselemente können als Federzinken ausgeführt sein; insbesondere können die Federzinken derartig ausgeführt sein, wie sie in der deutschen Patentanmeldung mit dem amtlichen Aktenzeichen 10 2016 107 951.0 beschrieben sind, wobei auch verschiedenste andere Ausführungsformen von Federzinken Verwendung finden können. Auch können neben Federzinken diverse andere in der Landwirtschaft übliche Zinkensysteme bzw. Scharsysteme eingesetzt werden. Auch Lockerungs- oder Schneidscheiben wären einsetzbar, wobei die Lockerungselemente jeweils so ausgeführt sind, dass mittels dieser der Ackerboden gelockert bzw. aufgebrochen wird. Die Verwendung von Federzinken bietet jedoch den Vorteil, dass diese in einer Feldarbeit zu Vibrationen angeregt werden, wodurch der Lockerungseffekt noch weiter verbessert wird. Darüber hinaus werden bei derartigen Federzinken keine zusätzlichen Feder- oder Lagerungselemente benötigt, wodurch eine entsprechend kostengünstige Ausführung der Lockerungselemente ermöglicht wird.

Eine Ausführungsvariante kann vorsehen, dass an das zumindest eine Lockerungselement ein in einem Winkel α bzw. schräg zur Pflanzenreihe angeordneter Rotor folgt, welchem Rotor wiederum an dessen Umfang eine Vielzahl von Zinken und/oder Bürsten oder dergl. zugeordnet sind, wobei der Winkel α hierbei variabel einstellbar ist, um somit eine Anpassung an die jeweiligen Bedingungen zu ermöglichen, wobei die Zinken und/oder Bürsten des sich drehenden Rotors in den Boden einstechen, ihn lockern, Unkrautpflänzchen herausreißen oder bedecken können, ohne die Nutzpflanze zu schädigen. Die Zinken und/oder Bürsten können sowohl durch Stahlelemente wie bspw. Rundstähle, aber auch durch Striegelelemente gebildet werden. Die Zinken und/oder Bürsten können jedoch auch aus einem Kunststoff oder Gummi- oder Gussmaterial oder jeglichem anderen Material gefertigt sein, wobei deren Ausführung insbesondere derart ist, dass diese elastisch verformbar sind, um somit Beschädigungen dieser, bspw. durch ein Auftreffen auf Steine oder Hindernisse oder dergl. zu vermeiden, sowie um eine Anpassung an Bodenunebenheiten zu ermöglichen. Auch könnten die Zinken und/oder Büsten auch nicht elastisch verformbar sein.

Der wenigstens eine Rotor kann mittels eines motorischen Antriebes in Rotation versetzt sein, was gegenüber den aus dem Stand der Technik bekannten bodenangetriebenen Rotoren den Vorteil aufweist, dass dessen Drehzahl und/oder Drehrichtung variabel veränderbar ist, wobei dies wiederum in Abhängigkeit verschiedenster Parameter erfolgen kann. Durch Variation der Drehzahl und/oder Drehrichtung kann somit die Wirksamkeit des Rotors bei der Unkrautbekämpfung entsprechend angepasst werden, so das bspw. in Abhängigkeit des Wachstums der Nutzpflanze mit einer größeren oder geringeren Drehzahl gearbeitet werden kann, ohne diese zu beschädigen, was bei bekannten bodenangetriebenen Rotoren nicht möglich ist. Um dies noch weiter zu verbessern kann bzw. können auf Basis der Parameter auch der bzw. die Winkel α des wenigstens einen Rotors verändert bzw. angepasst werden. Darüber hinaus könnte auch die Arbeitstiefe auf Basis der Parameter bzw. auch auf Basis der Drehzahl und/oder Drehrichtung und/oder des Winkels α verändert werden.

Eine Arbeitsweise einer Reiheneinheit könnte wie folgt sein: In einem ersten Schritt wird der Ackerboden mit zumindest einem, vorzugsweise jedoch wenigstens einem links und rechts neben der Pflanzenreihe geführten Lockerungselement gelockert bzw. aufgebrochen. Anschließend wird der gelockerte Boden sowie sich zwischen den Nutzpflanzen der Pflanzenreihe befindendes Unkraut mit dem Rotor aus dieser entfernt, wobei der Rotor hierfür mit einer veränderbaren Drehzahl und/oder Drehrichtung rotiert, wobei der Rotor hierfür mittig zur Pflanzenreihe aber auch zu dieser versetzt angeordnet sein kann. Insbesondere kann dieser bei der Verwendung von nur einem Lockerungselement neben einer Seite der Pflanzenreihe, auf der gegenüberliegenden Seite der Pflanzenreihe bzw. des Lockerungselements angeordnet sein.

Der wenigstens eine Rotor wird mittels eines motorischen Antriebs angetrieben, wobei die Drehzahl und/oder die Drehrichtung auf Basis von verschiedensten Parametern variabel veränderbar bzw. einstellbar ist, welche Einstellung wiederum manuell durch eine Bedienperson aber auch automatisiert mittels einer Steuerung bzw. einer Rechnereinheit bzw. einem in der Rechnereinheit hinterlegten, die Parameter verarbeitenden Steuerungsprogramm erfolgen kann. Der Antrieb kann insbesondere als hydraulischer und/oder pneumatischer und/oder elektrischer Antrieb bzw. als jeglicher Motor ausgeführt sein, dessen Drehzahl und/oder Drehrichtung variabel aber auch stufenweise veränderbar ist, wobei die Drehzahl bspw. durch eine Veränderung der Energiezufuhr, d.h. durch eine Erhöhung oder Verminderung eines Drucks oder einer Erhöhung oder Verminderung der zugeführten Leistung verändert werden kann.

Als Parameter zur Veränderung der Drehzahl und/oder Drehrichtung, aber auch des Winkels und/oder der Arbeitstiefe kann bspw. die Fahrgeschwindigkeit, mit der die Reiheneinheit über eine Ackerfläche bewegt wird, verwendet werden. Ein weiterer Parameter könnte bspw. die Pflanzenbestandsdichte bzw. die Art und das jeweilige Wachstumsstadium der Nutzpflanzen in der Pflanzenreihe sein, aber auch der jeweilige Unkrautbefall könnte entsprechend mit betrachtet werden. Bei Verwendung mehrerer nebeneinander angeordneter Reiheneinheiten in einem definierten Abstand zueinander könnte auch dieser Abstand bzw. der Abstand der Pflanzenreihen als Parameter dienen. Auch könnten als Parameter jeweils Eigenschaften des Rotors dienen, bspw. welchen Durchmesser weist dieser auf oder wie viele Reihen von Zinken und/oder Bürsten sind diesem zugeordnet. So könnte vorgesehen sein, dass die Drehzahl bspw. umso kleiner ist, je größer der Durchmesser ist und umgekehrt, oder dass die Drehzahl umso größer ist, je größer der Durchmesser ist und umgekehrt. Auch die elastischen Eigenschaften des Rotors könnten mit beachtet werden. Generell sind somit die verschiedensten Parameter denkbar, auf Basis derer die Drehzahl und/oder Drehrichtung aber auch der Winkel des Rotors und/oder die Arbeitstiefe des Rotors jeweils verändert werden kann. Auch könnten jeweils der Winkel und/oder die Arbeitstiefe und/oder die Drehzahl und/oder die Drehrichtung wiederum jeweils als Parameter dienen. Auch könnten Positionsdaten der Reiheneinheit in Bezug auf die Pflanzenreihe verwendet werden, so dass in Abhängigkeit von der Drehzahl und/oder Drehrichtung die Reiheneinheit entsprechend gelenkt werden kann, wobei hierzu zusätzlich der Winkel α des Rotors entsprechend zusätzlich mit variiert bzw. mit beachtet werden kann. Um diese Funktion zu verbessern, könnte ein Messsystem vorgesehen sein, welches die jeweilige Position der Reiheneinheit in Bezug auf die Pflanzenreihe ermittelt, bspw. ein Kamerasystem oder Positionssensoren oder dergl. Aber auch ein GPS-System oder dergl. könnte verwendet werden; so könnte die Reiheneinheit bzw. die landwirtschaftliche Maschine somit auch gelenkt werden.

Die Lockerungselemente und/oder die Rotoren können höhenverstellbar an der Reiheneinheit bzw. an einem Träger angebracht sein, so dass deren Arbeitstiefe an entsprechende Bedingungen angepasst werden kann. Dies kann stufenweise aber auch stufenlos erfolgen, bspw. mittels Zylinder oder Linearelementen oder Spindeln oder dergl. Insbesondere sind die Lockerungselemente und der wenigstens eine Rotor so zueinander angeordnet, dass zumindest ein Lockerungselement eine größere Arbeitstiefe als der Rotor aufweist, wobei diese Differenz bspw. größer oder gleich 20 mm, insbesondere jedoch größer oder gleich 50 mm ist. Auch wäre es denkbar, dass wiederum die in zwei Reihen angeordneten Lockerungselemente zueinander höhenverstellbar sind, aber auch jeweils die links und rechts neben der Pflanzenreihe angeordneten Lockerungselemente jeweils unabhängig voneinander höhenverstellbar sind. So könnte das vordere Lockerungselement eine größere Arbeitstiefe als das hintere aufweisen, wobei auch hier wiederum eine Differenz vorhanden sein kann, welche bspw. größer oder gleich 20 mm, vorzugsweise jedoch größer oder gleich 50 mm ist.

Je nach Ausführungsbeispiel können beispielsweise die Lockerungselemente höhenverstellbar sowie die Rotoren nicht höhenverstellbar sondern fest am Rahmen angebracht sein, wobei die Lockerungselemente und die Rotoren jeweils getrennt voneinander am Rahmen montiert sind. Es wäre jedoch auch denkbar, dass diese jeweils an einem gemeinsamen Träger montiert sind, welcher Träger wiederum höhenverstellbar mit dem Rahmen verbunden sein kann, wobei ebenso am Träger sowohl die Lockerungselemente als auch die Rotoren höhenverstellbar angebaut sein können. Auch könnten bspw. nur die Lockerungselemente oder nur die Rotoren am Träger höhenverstellbar angebracht sein.

Die Höhenverstellung der Werkzeuge der Reiheneinheiten kann sowohl manuell als auch automatisiert erfolgen. So können an der Reiheneinheit bspw. entsprechende Sensorelemente zur jeweiligen Ermittlung der Arbeitstiefe der Lockerungselemente oder der Rotoren oder sonstiger Werkzeuge vorhanden sein. In Abhängigkeit von verschiedensten Parametern kann somit wiederum die jeweilige Arbeitstiefe dieser eingestellt werden. Auch diese kann wiederum mittels einer Steuerprogramm und/oder einer Steuerung erfolgen, wobei in der Steuerung und/oder im Steuerprogramm jeweils verschiedenste Parameter verarbeitet werden können. Diese Parameter können bspw. mittels verschiedenster Messmittel erfasst werden. Zusätzlich könnte darüber hinaus noch vorgesehen sein, dass auf Basis dieser Parameter und/oder in Abhängigkeit der Drehzahl und/oder Drehrichtung auch der Winkel α zwischen dem wenigstens einen Rotor und den Pflanzenreihen und/oder die Arbeitstiefe des wenigstens einen Rotors geändert wird. Auch kann die Drehzahl und/oder Drehrichtung sowie der Winkel in Abhängigkeit der jeweiligen Arbeitstiefen der Lockerungselemente und/oder des wenigstens einen Rotors verstellt werden. Diese Verstellung kann ebenfalls mit Motoren und/oder Antrieben erfolgen, aber auch durch eine mechanische Verstellung durch eine Bedienperson.

Der wenigstens eine Rotor ist schräg bzw. in einem Winkel α zur Fahrtrichtung bzw. zu den Pflanzenreihen angeordnet, wobei auch wiederum dieser Winkel α aufgrund des motorischen Antriebs veränderbar sein kann, und auch dieser wiederum von verschiedensten Parametern abhängig sein kann. Der Winkel α ist hierbei insbesondere kleiner oder gleich 90°, vorzugsweise jedoch kleiner oder gleich 45°. Auch diese Winkelanpassung kann sowohl manuell durch eine Bedienperson als auch automatisiert erfolgen.

Eine weitere Ausführungsform der Reiheneinheit sieht darüber hinaus vor, dass dem zumindest einen wie vorhergehend beschriebenem Lockerungselement zwei oder mehr, jeweils in einem Winkel α und einem Winkel β und einem Winkel n bzw. schräg zur Pflanzenreihe angeordnete Rotoren folgen, wobei die Rotoren oder mehrere Rotoren sowohl baugleich als auch unterschiedlich ausgeführt sein können. Auch können diese jeweils die gleiche Ausrichtung in Bezug auf die Pflanzenreihe als auch eine unterschiedliche Ausrichtung aufweisen. Insbesondere können die Rotoren jeweils entgegengesetzt zueinander ausgerichtet sein. Auch können somit die Winkel α und β und n identisch oder verschieden sein. Den Rotoren sind jeweils an deren Umfang Zinken und/oder Bürsten und/oder dergl. zugeordnet. Diese Zinken und/oder Bürsten können sowohl durch Stahlelemente wie bspw. Rundstähle, aber auch durch Striegelelemente gebildet werden. Die Zinken und/oder Bürsten können jedoch auch aus einem Kunststoff oder Gummi- oder Gussmaterial oder jeglichem anderen Material gefertigt sein, wobei deren Ausführung insbesondere derart ist, dass diese elastisch verformbar sind, um somit Beschädigungen dieser, bspw. durch ein Auftreffen auf Steine oder Hindernisse oder dergl. zu vermeiden, sowie um eine Anpassung an Bodenunebenheiten zu ermöglichen. Auch könnten die Zinken und/oder Büsten auch nicht elastisch verformbar sein. Zumindest einer der Rotoren kann mittels eines motorischen Antriebes, sowie der wenigstens eine andere mittels Bodenantrieb angetrieben sein. Auch können alle Rotoren mittels eines motorischen Antriebs angetrieben sein. Sowohl die Drehzahlen als auch die Drehrichtungen der wenigstens zwei Rotoren können zudem verschieden aber auch identisch sein.

Die Drehzahl des wenigstens einen Rotors oder der mehreren Rotoren können hier bspw. in einem Bereich zwischen 10 min⁻¹ und 200 min⁻¹ liegen, wobei diese Drehzahl bspw. umso geringer sein kann, je geringer der Winkel α und/oder der Winkel β und/oder der Winkel n ist/sind, oder umgekehrt. Auch kann die Drehzahl bei einer größeren Menge an Unkraut entsprechend erhöht werden. Befinden sich die Nutzpflanzen jedoch noch in einem geringen Wachstumsstadium, kann hingegen die Drehzahl verringert werden, um die Nutzpflanzen somit nicht zu beschädigen. Aufgrund der variablen Veränderbarkeit der Drehzahl kann somit die mechanische Unkrautbekämpfung wesentlich gegenüber den aus dem Stand der Technik mittels Bodenantrieb angetriebenen Rotoren verbessert werden, da deren Drehzahl immer proportional zur Fahrgeschwindigkeit ist und somit keine Anpassung an einen Pflanzenbestand möglich ist.

Eine weitere Arbeitsweise einer Reiheneinheit könnte wie folgt sein: Zunächst wird der Ackerboden mit zumindest einem, vorzugsweise jedoch wenigstens einem links und rechts neben der Pflanzenreihe geführten Lockerungselement gelockert bzw. aufgebrochen. Anschließend wird der gelockerte Boden bzw. das sich zwischen den Nutzpflanzen der Pflanzenreihe befindendes Unkraut mit einem ersten Rotor, welcher mit einer ersten Drehzahl und einer ersten Drehrichtung rotiert, aus der Pflanzenreihe entfernt, wobei der Rotor hierzu mittig zur Pflanzenreihe angeordnet ist, jedoch auch versetzt zu dieser sein kann. Um dies zu verbessern, schließt nachfolgend an den ersten Rotor ein zweiter Rotor an, welcher mit einer zweiten Drehzahl und einer zweiten Drehrichtung rotiert, wobei auch dieser Rotor wiederum mittig zur Pflanzenreihe aber auch versetzt zu dieser angeordnet sein kann. So könnten auch beide Rotoren versetzt zur Pflanzenreihe angeordnet sein, wobei mittels eines ersten jeweils Ackerbodens und Unkraut aus den Pflanzenreihe entfernt und mittels eines zweiten Rotors wiederum zumindest ein gewisser Anteil an Ackerboden wieder in die Pflanzenreihe zurück befördert werden kann, um somit eine ausreichende Abdeckung der Nutzpflanzen in den Pflanzenreihen sicherzustellen, was bspw. mit den aus dem Stand der Technik bekannten Systemen bislang nicht möglich war. Hierbei können wiederum die Drehzahlen und/oder Drehrichtungen in Abhängigkeit von verschiedensten Parameter verändert werden. Sowohl die Drehzahlen als auch die Drehrichtungen der wenigstens zwei Rotoren können jeweils verschieden, aber auch identisch sein. Auch können die Winkel α und β entsprechend einer Drehrichtung und/oder Drehzahl entsprechend mit geändert werden und sowohl identisch als auch verschieden sein. Auch könnte die Arbeitstiefe der wenigstens zwei Rotoren jeweils entsprechend mit angepasst werden.

Sowohl bei einer Reiheneinheit mit einem Rotor als auch bei einer Reiheneinheit mit zwei oder mehr Rotoren kann anschließend an die Rotoren sich ein Zustreicher anschließen, mit welchem zumindest anteilsmäßig der vorher von den Rotoren aus den Pflanzenreihen entfernter Boden wieder in diese zurückgefördert wird und dieser zusätzlich noch eine Rückverfestigung erfährt, um somit einen ausreichenden Bodenschluss zwischen den Nutzpflanzen und dem Ackerboden zu erreichen. So kann ein Zustreicher sowohl links als auch rechts neben der Pflanzenreihe aber auch jeweils nur an einer Seite der Pflanzenreihe geführt werden.

Gemäß einem Ausführungsbeispiel können sowohl die Lockerungselemente sowie die Zustreicher voneinander getrennt und mittels Lochkulissen höhenverstellbar sowie die Rotoren nicht höhenverstellbar ausgebildet sein. Es wäre jedoch auch denkbar, dass zumindest die Lockerungselemente, die Rotoren und die Zustreicher an einem gemeinsamen Träger montiert sind, welcher wiederum höhenverstellbar an einem Rahmen einer landwirtschaftlichen Maschine montiert sein kann, wobei wiederum zumindest die Lockerungselemente und die Zustreicher höhenverstellbar am Träger angebracht sein können. Auch könnten am Träger nur die Rotoren höhenverstellbar angebracht sein.

So könnte eine Arbeitsweise einer Reiheneinheit zur mechanischen Unkrautbekämpfung auch wie folgt sein: Zunächst wird der Ackerboden neben der Pflanzenreihe mit zumindest einem, vorzugsweise jedoch jeweils links und rechts neben der Pflanzenreihe jeweils zumindest einem Lockerungselement gelockert, bzw. aufgebrochen. Anschließend wird der gelockerte Boden sowie sich zwischen den Nutzpflanzen der Pflanzenreihe befindendes Unkraut mit einem ersten Rotor, welcher mit einer ersten Drehzahl und/oder Drehrichtung rotiert, aus der Pflanzenreihe entfernt, wobei der Rotor mittig zur Pflanzenreihe, aber auch zu dieser versetzt sein kann. Nachfolgend zum ersten Rotor folgt ein zweiter Rotor, welcher mit einer zweiten Drehzahl und/oder zweiten Drehrichtung rotiert. Der zweite Rotor kann seitlich versetzt zur Pflanzenreihe angeordnet sein und mit einer derartigen Drehzahl und/oder Drehrichtung bewegt sein, dass zumindest ein Teil des mittels des ersten Rotors aus der Pflanzenreihe entfernten Ackerbodens mit dem zweiten Rotor wieder in die Pflanzenreihe zurückgeführt wird, um somit eine ausreichende Bedeckung der Nutzpflanzen bzw. von deren Wurzeln mit Boden zu gewährleisten sowie ggf. noch verbleibende Unkräuter in der Pflanzenreihe zu bedecken, um somit deren Wachstum zu verhindern. Wiederum an den zweiten Rotor schließen ein oder mehr Zustreicher an, mittels welchen zumindest anteilsmäßig vorher von den Rotoren aus den Pflanzenreihen entfernter Ackerboden wieder in diese zurückgefördert wird, um eine ausreichende Bedeckung der Nutzpflanzen in den Pflanzenreihen bzw. von deren Wurzeln zu gewährleisten. Die erste und die zweite Drehzahl und/oder Drehrichtung können jeweils unterschiedlich, aber auch identisch sein. Auch können die Winkel α und β der Rotoren sowie deren Arbeitstiefe unterschiedlich oder identisch sein.

Die Zustreicher können links und/oder rechts neben der Pflanzenreihe geführt werden, wobei diese nebeneinander in einem Abstand angeordnet sein können, dass diese zwar möglichst nahe an die Pflanzenreihe heranreichen, die Pflanzen in dieser aber nicht beschädigt werden, d.h. mittels dieser Zustreicher kann zumindest anteilsmäßig vorher von den Rotoren aus den Pflanzenreihen entfernter Ackerboden wieder an diese zurückgeführt werden, um eine ausreichende Bedeckung der Nutzpflanzen bzw. von deren Wurzeln zu gewährleisten. Auch können die Zustreicher in Fahrtrichtung zueinander versetzt angeordnet sein. Den Zustreichern können Kufen zum Führen bzw. zum geführten Bewegen des Ackerbodens zugeordnet sein, welche Kufen von vorne oben nach hinten unten orientiert sein können, wobei sich deren Abstand zueinander von vorne nach hinten verringern kann. Derartige Zustreicher können sowohl bei Reiheneinheiten mit einem als auch bei Reiheneinheiten mit zwei oder mehr Rotoren verwendet werden.

Die Lockerungselemente können derartig ausgebildet sein, dass diese in deren unterem Bereich einen Scharköper aufweisen. Dieser Scharkörper kann sowohl als separates Bauteil als auch Teil des Zinkens sein. Auch kann ein Scharstiel als Scharkörper verwendet werden. Bei einem als Federzinken ausgeführten Lockerungselement kann auch dieser elastische Bereich als Scharköper ausgebildet sein. Der Scharkörper bzw. der als Scharkörper ausgebildete Bereich des Zinkens kann in Fahrtrichtung von hinten oben nach vorne unten geneigt oder auch senkrecht zur Fahrtrichtung orientiert sein sowie eine ebene und/oder eine zumindest abschnittweise konkave und/oder konvexe vordere Kontur aufweisen, wobei der Scharkörper jeweils so geformt ist, dass mit diesen der Ackerboden gelockert und aufgebrochen wird. Auch können sog. Gänsefußschare verwendet werden.

Am rückwärtigen Ende des Scharkörpers können jeweils links und/oder rechts Schneiden angeordnet sein, mit denen der Ackerboden in einer definierbaren Arbeitstiefe möglichst großflächig ggf. auch ganzflächig durchschnitten wird, ohne jedoch hierbei den Ackerboden zu vermischen, bzw. ohne hierbei Ackerboden gezielt nach oben zu befördern. Mit den Schneiden wird somit erreicht, dass die Wurzeln der Unkräuter abgeschnitten werden, der Ackerboden hierbei aber nur minimal durchlüftet wird, um ein Nachwachsen des Unkrauts zu verhindern. Die Schneiden können von vorne nach hinten Y-förmig oder V-förmig ausgebildet sein und in Bezug auf den geneigten oder senkrechten Scharkörper einen Winkel aufweisen, der größer oder gleich 45° ist, jedoch auch kleiner oder gleich 90° sein kann. Insbesondere sind die Schneiden am Scharkörper bzw. am Zinken derartig angebracht, dass diese waagerecht orientiert sind, bzw. dass diese parallel zur Bodenoberfläche verlaufen, wobei durch Veränderung des Winkels der Schneiden das jeweilige Durchmischen des Ackerbodens verändert werden kann.

Um den Verschleiß des Scharkörpers bzw. der Schneiden möglichst gering zu halten, sind diese bspw. aus einem verschleißfesten Material wie bspw. Hardox oder Borstahl oder dergl. gefertigt. Auch können die einem Verschleiß unterliegenden Flächen des Scharkörpers bzw. der Schneiden mit Hartmetallelementen bestückt sein. Auch können die Schneiden aus einem Rundmaterial gefertigt sein. Der Scharkörper weist insbesondere eine Breite auf, die größer oder gleich 20 mm ist. Die Y-förmigen und/oder V-förmigen Schneiden sind in deren vorderen Bereich genauso breit wie der Scharkörper, jedoch erweitert sich dessen Breite vorzugsweise symmetrisch auf eine Breite, die größer oder gleich 50 mm ist, insbesondere jedoch 100 mm beträgt, wobei hierbei die Y-förmige Ausgestaltungsvariante zunächst einen Abschnitt besitzt, der die gleiche Breite wie der Scharkörper aufweist. Diese Breite kann wiederum vom Reihenabstand der Pflanzenreihen sowie von der Anzahl an Lockerungselementen abhängen. Die Erweiterung der Schneiden in Bezug auf die Scharkörper weist mindestens ein Verhältnis von 1 : 2, insbesondere jedoch von größer gleich 1 : 3 oder größer gleich 1 : 5 auf. Durch dieses Verhältnis wird wiederum definiert, wie intensiv der Ackerboden gelockert und durchmischt wird und wie intensiv die Unkrautwurzeln abgeschnitten werden.

Darüber hinaus weisen die Schneiden eine Länge von wenigstens 50 mm bzw. von wenigstens 100 mm auf, wobei hierbei wiederum vorgesehen sein kann, dass die Breite und die Länge identisch sind, oder dass die Schneiden um wenigstens ein Viertel länger sind als breit. Um Beschädigungen oder dergl. der Schneiden durch den Y-förmigen und/oder V-förmigen Verlauf durch somit möglicherweise entstehende Spitzen zu vermeiden, können die jeweiligen Enden der Schneiden mit Schrägen oder Rundungen oder Abflachungen versehen sein. Die Schneiden besitzen zudem eine Dicke von wenigstens 3 mm, an dessen vorderen Abschnitt wiederum eine spitz verlaufende Kontur als eigentliche Schneidkante anschließen kann, wobei die Vorderkante bzw. somit auch die Schneidkante auch stumpf sein kann. Ebenso können hier auch Rundstähle oder dergl. Materialien verwendet werden, welche wiederum mit dem Scharkörper oder dem Zinken verschweißt sein können. In einer bevorzugten Ausführungsform können der Scharkörper und die Schneide als gemeinsames Schmiedeteil oder Gussteil ausgeführt sein. Diese können wiederum an einen Federzinken oder jeglichen sonstigen Zinken oder Scharstiel oder elastischen Abschnitt angeschraubt bzw. an diesen montiert werden.

Unabhängig von der jeweiligen Ausführungsform der Reiheneinheit und der Anzahl an vorhanden Rotoren können die Rotoren verschiedenste Ausführungsformen aufweisen, wobei diese in der Regel jeweils einen Grundkörper aufweisen, welcher Grundkörper in dessen Zentrum eine Lagerhülse aufweisen kann, mittels derer die Rotoren rotierend an einer Reiheneinheit oder einer landwirtschaftlichen Maschine montiert werden können bzw. über welche Lagerhülse eine Antriebswelle eines Antriebs mit dem Rotor verbunden werden kann, welcher Antrieb wiederum an einem Flansch montiert sein kann. Die Lagerhülse kann somit aber auch mit einer Lagerung verbunden werden. An die Lagerhülse schließt der Grundköper an, welcher bspw. aus einem vorderen- und hinteren Abdeckblech zusammengesetzt ist, wobei sich jeweils zwischen diesen Montageelemente erstrecken können.

Auch könnte der Grundkörper ein vorderes und hinteres Abdeckblech sowie ein oder mehrere dazwischen liegende Zwischenbleche aufweisen, wobei sich wiederum zwischen diesen jeweils Montageelemente in Form von Blechen, Rohren, Hülsen Profilrohre oder dergl. erstrecken können, an welchen Montagelementen jeweils Bohrungen oder dergl. vorhanden sein können, um somit die jeweiligen Zinken und/oder Bürsten und/oder dergl. montieren zu können.

Die Zinken und/oder Bürsten können sowohl durch Stahlelemente wie bspw. Rundstähle, aber auch durch Striegelelemente gebildet werden. Die Zinken und/oder Bürsten können jedoch auch aus einem Kunststoff oder Gummi- oder Gussmaterial oder jeglichem anderen Material gefertigt sein, wobei deren Ausführung insbesondere derart sein kann, dass diese elastisch verformbar sind um somit Beschädigungen dieser, bspw. durch ein Auftreffen auf Steine oder Hindernisse oder dergl. zu vermeiden, sowie um eine Anpassung an Bodenunebenheiten zu ermöglichen.

Auch könnten die Zinken und/oder Büsten auch nicht elastisch verformbar sein. Auch können die Zinken jeweils radial zueinander verdreht angeordnet sein, wobei diese Verdrehung wiederum von der Anzahl an Zinken abhängig ist, so könnte diese bspw. 45° oder 75° oder 90° betragen. Durch eine mehrreihige Anordnung der Zinken ergibt sich zudem eine wesentlich verbesserte Arbeitsqualität der Rotoren, gegenüber der aus dem Stand der Technik bekannten einreihigen Anordnungen, ohne hierfür zusätzliche Hilfsmittel zu benötigen. Auch können die Rotoren bspw. derartig ausgeführt sein wie sie in der DE 198 43 677 A1 oder in der EP 1 127 481 B1 oder in der EP 1 116 427 B1 beschrieben sind.

Gemäß einem Ausführungsbeispiel können die Rotoren einen Grundkörper aufweisen, welcher wiederum eine Lagerhülse besitzt, mittels derer der Rotor rotierend an einer Reiheneinheit oder einer landwirtschaftlichen Maschine montiert werden kann, mittels welcher aber auch ein motorischer Antrieb aufgenommen werden kann. An die Lagerhülse kann sich der Grundkörper anschließen, welcher sich aus einem vorderen und einem hinteren Abdeckblech zusammensetzt. Zwischen den Abdeckblechen können sich jeweils Montageelemente, bspw. in Form von Montageblechen oder von Rohren oder Profilen oder dergl. erstrecken. In den Montageelementen können Bohrungen vorhanden sein, mittels welcher Bohrungen die am Umfang des Grundkörpers angeordneten Zinken montiert werden können. Um zum einen kostengünstige sowie zum andern um Zinken zu erhalten, welche elastisch verformbar sind, um somit Beschädigungen oder dergl. zu vermeiden, können diese als Striegelelemente gebildet sein, wobei die Striegelelemente wiederum jeweils zwei Zinken aufweisen und die Striegelelemente sich in Längsrichtung zwischen den Abdeckblechen erstrecken. Zudem können die Montageelemente und entsprechend die Striegelelemente 40 um 45° zueinander verdreht am Grundkörper montiert sein, wobei wiederum diese Verdrehung auch geringer oder größer sein kann. Zusätzlich zur Verdrehung können die Striegelelemente in deren Erstreckung zwischen den Abdeckblechen zueinander versetzt angeordnet sein, wodurch sich eine vierreihige Anordnung bildet. Durch diese mehrreihige Anordnung der Zinken kann sich eine wesentlich bessere Arbeitsqualität der Rotoren gegenüber den aus dem Stand der Technik bekannten einreihigen Anordnungen ergeben.

Gemäß einem weiteren Ausführungsbeispiel können die Rotoren einen Grundkörper aufweisen, welcher wiederum eine Lagerhülse besitzt, mittels derer der Rotor rotierend an einer Reiheneinheit oder einer landwirtschaftlichen Maschine montiert werden kann, mittels welcher aber auch ein motorischer Antrieb aufgenommen werden kann. An die Lagerhülse kann sich ein Grundkörper anschließen, welcher sich aus einem vorderen und einem hinteren Abdeckblech sowie einem Zwischenblech zusammensetzt, zwischen welchen wiederum Abstandshülsen oder Abstandsbleche oder Rohre oder Profile angeordnet sind. An den Abdeckblechen und am Zwischenblech können jeweils Bohrungen oder dergl. vorhanden sein, welche als Montageelemente dienen, wobei mit diesen Montageelementen jeweils am Umfang des Grundkörpers eine Vielzahl von Federnmontiert werden kann. Um zum einen kostengünstige Zinken zu erhalten sowie zum andern um Zinken zu erhalten, welche elastisch verformbar sind, um somit Beschädigungen oder dergl. zu vermeiden, sind diese aus Striegelelementen gebildet, wobei die Striegelelemente zwei Zinken aufweisen und jeweils radial zueinander versetzt am Umfang der Abdeckbleche sowie des Zwischenblechs angeordnet sein können. Die Striegelelemente können somit eine dreireihige Anordnung der Zinken ausbilden, wodurch die Arbeitsqualität der Rotoren erhöht wird. Zudem können die Striegelelemente zwischen der ersten Reihe und der zweiten Reihe verdreht zueinander angeordnet, da in jeder Reihe jeweils fünf Striegelelemente angebracht sind. Um regelmäßige Abstände zu erhalten, sind die Striegelelemente jeweils um 36° zueinander verdreht, wobei hier auch andere Winkel denkbar wären, und wobei auch die Striegelelemente aller drei Reihen zueinander verdreht sein könnten.

Gemäß einem weiteren Ausführungsbeispiel können die Rotoren einen Grundkörper aufweisen, welcher wiederum eine Lagerhülse besitzt, mittels derer der Rotor rotierend an einer Reiheneinheit oder einer landwirtschaftlichen Maschine montiert werden kann, mittels welcher aber auch ein motorischer Antrieb aufgenommen werden kann. An die Lagerhülse kann sich ein Grundkörper anschließen, welcher sich aus einem vorderen und einem hinteren Abdeckblech sowie einem Zwischenblech zusammensetzt, zwischen welchen wiederum Abstandshülsen oder Abstandsbleche oder Rohre oder Profile angeordnet sind. An den Abdeckblechen und am Zwischenblech können jeweils Bohrungen oder dergl. vorhanden sein, welche als Montageelemente dienen, wobei mit diesen Montageelementen jeweils am Umfang des Grundkörpers eine Vielzahl von Federn montiert werden kann. Um zum einen kostengünstige Zinken zu erhalten sowie zum andern um Zinken zu erhalten, welche elastisch verformbar sind, um somit Beschädigungen oder dergl. zu vermeiden, können diese aus Striegelelementen gebildet sein, wobei die Striegelelementen zwei Zinken aufweisen und jeweils radial zueinander versetzt am Umfang der Abdeckbleche sowie des Zwischenblechs angeordnet sind.

Zusätzlich zur Verdrehung können jeweils zwei zueinander axial versetzte Striegelelemente an jedem Abdeckblech und am Zwischenblech angeordnet, wobei hierfür sowohl die Abdeckbleche als auch die Zwischenbleche jeweils Kantungen aufweisen, an welchen wiederum jeweils zwei Montagelemente angebracht sind. Die Striegelelemente könnten jedoch hierfür auch bspw. an einer Vorder- und einer Rückseite der Abdeckbleche und der Zwischenbleche angebracht sein. Die Striegelelemente können somit eine sechsreihige Anordnung der Striegel ausbilden, wodurch die Arbeitsqualität der Rotoren erhöht werden kann. Zudem können die Striegelelemente zwischen den Reihen von Zinken jeweils verdreht zueinander angeordnet sein, da in jeder Reihe jeweils drei Striegelelemente angebracht sind und um regelmäßige Abstände zu erhalten. Durch eine derartige Anordnung kann wiederum die Drehzahl entsprechend angepasst werden, bzw. kann auch diese Anordnung als Parameter dienen.

Gemäß einem weiteren Ausführungsbeispiel können die Rotoren einen Grundkörper aufweisen, welcher wiederum eine Lagerhülse besitzt, mittels derer der Rotor rotierend an einer Reiheneinheit oder einer landwirtschaftlichen Maschine montiert werden kann, mittels welcher aber auch ein motorischer Antrieb aufgenommen werden kann. An die Lagerhülse kann sich ein Grundkörper anschließen, welcher sich aus einem vorderen und einem hinteren Abdeckblech sowie zwei zwischen diesen angeordneten Zwischenblechen zusammensetzt. Zwischen den Abdeckblechen und den Zwischenblechen sowie an das hintere Abdeckblech anschließend können jeweils Montageelemente in Form von Montageblechen angeordnet sein, an welchen wiederum jeweils Bohrungen vorhanden sind, um somit am Umfang des Grundkörpers des Zinkens anbauen zu können. Um zum einen kostengünstige sowie zum andern um Zinken zu erhalten, welche elastisch verformbar sind, um somit Beschädigungen oder dergl. zu vermeiden, können die Zinken aus Striegelelementen gebildet sein, wobei die Striegelelemente jeweils einen Zinken aufweisen und jeweils radial zueinander versetzt an den Montageelementen angebracht sind. Die Striegelelemente können somit eine vierreihige Anordnung der Zinken aufweisen, wodurch die Arbeitsqualität der Rotoren erhöht wird. Zudem können die Striegelelemente zwischen den Reihen von Zinken jeweils verdreht zueinander angeordnet sein, da in jeder Reihe jeweils drei Striegelelemente angebracht sind und um regelmäßige Abstände zu erhalten. Durch eine derartige Anordnung kann wiederum die Drehzahl entsprechend angepasst werden, bzw. kann auch diese Anordnung als Parameter dienen.

Gemäß einem weiteren Ausführungsbeispiel können die Rotoren einen Grundkörper aufweisen, welcher wiederum eine Lagerhülse besitzt, mittels derer der Rotor rotierend an einer Reiheneinheit oder einer landwirtschaftlichen Maschine montiert werden kann, mittels welcher aber auch ein motorischer Antrieb aufgenommen werden kann. An die Lagerhülse kann sich ein Grundkörper anschließen, welcher sich aus einem vorderen und einem hinteren Abdeckblech sowie einem Zwischenblech zusammensetzt, zwischen welchen wiederum Abstandshülsen oder Abstandsbleche angeordnet sind. An den Abdeckblechen und am Zwischenblech können jeweils Bohrungen oder dergl. vorhanden sein, welche wiederum als Montageelemente dienen, wobei mit diesen Montageelementen am Umfang des Grundkörpers eine Vielzahl von Zinken montiert werden kann. Um zum einen kostengünstige sowie zum andern um Zinken zu erhalten, welche elastisch verformbar sind, um somit Beschädigungen oder dergl. zu vermeiden, können die Zinken aus Stahlelementen in Form von Rundstählen gebildet sein, wobei die Stahlelemente jeweils einen Zinken aufweisen und jeweils radial zueinander versetzt am Umfang der Abdeckbleche sowie des Zwischenblechs angeordnet sind. Die Stahlelemente können somit eine dreireihige Anordnung der Zinken ausbilden, wodurch die Arbeitsqualität der Rotoren erhöht wird. Zudem können die Stahlelemente zwischen den Reihen von Zinken jeweils verdreht zueinander angeordnet, da in jeder Reihe jeweils neun Stahlelemente angebracht sind und um regelmäßige Abstände zu erhalten. Durch eine derartige Anordnung kann wiederum die Drehzahl entsprechend angepasst werden, bzw. auch kann diese Anordnung als Parameter dienen.

Gemäß weiteren Ausführungsbeispielen können wahlweise und/oder zusätzlich die Rotoren mit einem motorischen Antrieb verbunden sein, mittels welchem die Drehzahl und/oder Drehrichtung der Rotoren variabel veränderbar sind. Der Antrieb kann jeweils an einem Flansch montiert sein sowie über eine Antriebswelle mit dem Rotor verbunden sein. Es könnte jedoch auch vorgesehen sein, den Rotor direkt an einem Lagerstummel des Antriebs zu montieren. Beim Antrieb kann es sich sowohl um einen hydraulischen und/oder einen pneumatischen und/oder einen elektrischen Antrieb handeln, wobei die Drehzahl bspw. durch eine Veränderung der Energiezufuhr, d.h. durch eine Erhöhung oder Verminderung eines Drucks oder einer Erhöhung oder Verminderung der zugeführten Leistung verändert werden kann.

Eine weitere Arbeitsweise einer Reiheneinheit mit drei Rotoren könnte wie folgt sein: Zunächst wird der Ackerboden mit zumindest einem, vorzugsweise jedoch wenigstens einem links und rechts neben der Pflanzenreihe geführten Lockerungselement gelockert bzw. aufgebrochen. Anschließend wird der gelockerte Boden bzw. das sich zwischen den Nutzpflanzen der Pflanzenreihe befindendes Unkraut mit einem ersten Rotor, welcher mit einer ersten Drehzahl und einer ersten Drehrichtung rotiert, aus der Pflanzenreihe entfernt, wobei der Rotor hierzu mittig zur Pflanzenreihe angeordnet ist, jedoch auch versetzt zu dieser sein kann. Um dies zu verbessern, schließt nachfolgend an den ersten Rotor ein zweiter Rotor an, welcher mit einer zweiten Drehzahl und einer zweiten Drehrichtung rotiert, wobei auch dieser Rotor wiederum mittig zur Pflanzenreihe aber auch versetzt zu dieser angeordnet sein kann.

Wiederum anschließend wird mit einem dritten Rotor der sich in der Pflanzenreihe befindende Ackerboden noch vergleichmäßigt bzw. eingeebnet, wobei hierfür der dritte Rotor mit einer dritten Drehzahl und einer dritten Drehrichtung rotiert und mittig zur Pflanzenreihe angeordnet ist, jedoch auch versetzt zu dieser sein kann. So könnten auch alle Rotoren versetzt zur Pflanzenreihe angeordnet sein, wobei mittels eines ersten jeweils Ackerbodens und Unkraut aus den Pflanzenreihe entfernt und mittels eines zweiten Rotors wiederum zumindest ein gewisser Anteil an Ackerboden wieder in die Pflanzenreihe zurück befördert werden kann, und zudem mit einem dritten Rotor der zurückgeführte Ackerboden eingeebnet wird, um somit eine ausreichende Abdeckung der Nutzpflanzen in den Pflanzenreihen sicherzustellen, was bspw. mit den aus dem Stand der Technik bekannten Systemen bislang nicht möglich war. Wiederum können die Drehzahlen und/oder Drehrichtungen in Abhängigkeit von verschiedensten Parameter verändert werden. Sowohl die Drehzahlen als auch die Drehrichtungen der wenigstens zwei Rotoren können jeweils verschieden aber auch identisch sein. Auch können die Winkel α und β und n entsprechend einer Drehrichtung und/oder Drehzahl entsprechend mit geändert werden und sowohl identisch als auch verschieden sein. Auch können die jeweiligen Arbeitstiefen der Rotoren identisch oder verschieden sein und wiederum auf die Winkel sowie die Drehrichtung und/oder Drehzahl abgestimmt sein.

Es sei an dieser Stelle betont, dass sich alle Merkmale und Ausführungsformen der oben erwähnten Reiheneinheit gleichermaßen auf die nachfolgend beschriebene landwirtschaftliche Maschine übertragen lassen. Wenn also an einer oder mehreren Stellen die Rede von der Ausführungsform und/oder einer ihrer Ausführungsvarianten die Rede war, so beziehen sich die in diesem Zusammenhang definierten Merkmalskombinationen, Eigenschaften und/oder die dabei gemachten Aussagen uneingeschränkt auch auf die erfindungsgemäße landwirtschaftliche Maschine oder auch auf das erfindungsgemäße Verfahren zur mechanischen Unkrautbekämpfung.

Zur Erreichung der oben genannten Ziele schlägt die Erfindung weiterhin eine landwirtschaftliche Maschine mit den Merkmalen des Anspruchs 10 vor. So schlägt die Erfindung eine landwirtschaftliche Maschine zur mechanischen Unkrautbekämpfung vor, welcher zumindest zwei Reiheneinheiten, wie sie oben beschrieben wurden, insbesondere jedoch wenigstens vier oder mehr derartige Reiheneinheiten zugeordnet sind. In Abhängigkeit der Arbeitsbreite bzw. der Anzahl an vorhandenen Reiheneinheiten, kann die landwirtschaftliche Maschine einen Rahmen aufweisen. Der Rahmen kann einteilig sein, sich aber auch aus mehreren Abschnitten zusammensetzen, bspw. aus einem Mittelteil und aus jeweils links und rechts über horizontale Längsachsen schwenkbar zu diesem angeordneten Seitenteilen, wobei dieses Verschwenken wiederum mittels Linearelementen, wie bspw. Hydraulikzylinder erfolgen kann. Zudem weist der Rahmen eine Anhängevorrichtung auf, mittels derer die landwirtschaftliche Maschine mit einem Zugfahrzeug verbunden werden kann, wobei diese Anhängevorrichtung vorne oder hinten an der landwirtschaftlichen Maschine angebracht sein kann, je nachdem ob die landwirtschaftliche Maschine an einem Zugfahrzeug vorne oder hinten angebaut werden soll. Die Anhängevorrichtung kann bspw. eine Dreipunktanhängung sein, sie kann aber auch eine Zugdeichsel sein.

Zur Tiefenführung können der landwirtschaftlichen Maschine höhenverstellbare Tiefenführungselemente in Form von Tiefenführungsrollen oder Tiefenführungsräder zugeordnet sein. Mittels dieser Tiefenführungselemente kann die Arbeitstiefe der landwirtschaftlichen Maschine verstellt werden sowie die landwirtschaftliche Maschine entlang eines Ackerreliefs geführt werden, wobei es ebenso denkbar wäre, dass die Tiefenführungselemente nicht höhenverstellbar mit dem Rahmen verbunden sind und die Arbeitstiefe jeweils durch eine Verstellung der Reiheneinheit bzw. dessen Werkzeuge erfolgt. Die Verstellung der Tiefenführungselemente erfolgt bspw. mittels Lochkulissen, bei denen jeweils durch Absteckbolzen bzw. Absteckschrauben oder dergl. die Position einstellbar ist. Ebenso denkbar wäre jedoch auch eine stufenlose Verstellung bspw. mittels Zylinder oder Linear- oder Spindel- oder dergl. Verstellelemente.

Die Komponenten der Reiheneinheiten, insbesondere die ein oder mehreren Rotoren, können mittels eines Steuerprogramms bzw. einer Steuerung angesteuert und deren Drehzahl und/oder Drehrichtung aber auch deren Winkel entsprechend variabel verändert werden. Wiederum erfolgt die Ansteuerung des Antriebs mittels einer Rechnereinheit bzw. mittels eines in einer Rechnereinheit hinterlegten Regelprogramms. Neben der Rechnereinheit könnte hier jedoch auch eine Steuerung bspw. eine hydraulische oder pneumatische oder elektrische Steuerung oder eine Kombination aus diesen Systemen zur Ansteuerung des Antriebs vorgesehen sein. In der Rechnereinheit bzw. mittels der Steuerung werden verschiedenste Parameter verarbeitet, auf Basis welcher Parameter anschließend der Antrieb angesteuert wird. Als Parameter zur Veränderung der Drehzahl und/oder Drehrichtung, aber auch des Winkels kann bspw. die Fahrgeschwindigkeit, mit der die Reiheneinheit über eine Ackerfläche bewegt wird, verwendet werden. Ein weiterer Parameter könnte bspw. die Pflanzenbestandsdichte bzw. die Art und das jeweilige Wachstumsstadium der Nutzpflanzen in der Pflanzenreihe sein, aber auch der jeweilige Unkrautbefall könnte entsprechend mit betrachtet werden.

Gemäß einem Ausführungsbeispiel kann die Drehzahl und/oder Drehrichtung mittels eines motorischen Antriebs verändert werden, wobei die Ansteuerung des Antriebs mittels einer Rechnereinheit bzw. mittels eines in einer Rechnereinheit hinterlegten Regelprogramms erfolgt. Neben der Rechnereinheit könnte hier jedoch auch eine Steuerung bspw. eine hydraulische- oder pneumatische- oder elektrische- Steuerung oder eine Kombination aus diesen Systemen zur Ansteuerung des Antriebs vorgesehen sein.

In der Rechnereinheit bzw. mittels der Steuerung können verschiedenste Parameter verarbeitet werden, auf Basis derer anschließend der Antrieb entsprechend angesteuert wird. So könnte ein Parameter die Geschwindigkeit bzw. die Fahrgeschwindigkeit der landwirtschaftlichen Maschine sein. Ein weiterer Parameter könnte der jeweilige Reihenabstand, d.h. der jeweilige Abstand zwischen zwei Reiheneinheiten sein. Ebenso können als Parameter Eigenschaften des Rotors verwendet werden, d.h. dessen Durchmesser oder dessen Anzahl an Zinken oder ob dieser einreihig oder mehrreihig aufgebaut ist. Auch könnte der Parameter beinhalten, ob ein oder mehr Rotoren vorhanden sind sowie, in welchem Winkel α und/oder β diese in der Reiheneinheit angeordnet sind.

Ein weiterer Parameter könnte die Bestandsdichte sein, welche sowohl Nutzpflanzen als auch Unkräuter beinhaltet, so dass wiederum in Abhängigkeit des Bestandes die Drehrichtung und/oder Drehzahl entsprechend variiert wird. Die Parameter können manuell durch eine Bedienperson in einer Rechnereinheit hinterlegt werden oder aber auch die Steuerung entsprechend konzeptioniert sein. Auch können verschiedenste Messmittel an der landwirtschaftlichen Maschine vorhanden sein, mittels derer die Parameter erfasst werden. Neben den Parameter kann die Rechnereinheit auch mit einer Datenbank verbunden sein und von dieser entsprechende Parameter abrufen. Ebenso kann die Rechnereinheit mit einer entsprechenden Eingabevorrichtung ausgestattet sein, mittels derer wiederum Parameter eingegeben werden können.

In einer Weiterbildung der Erfindung könnte vorgesehen sein, dass zusätzlich auf Basis der Parameter und/oder in Abhängigkeit der Drehzahl und/oder Drehrichtung auch der Winkel α und β und/oder die Arbeitstiefe der Rotoren geändert wird.

Bei Verwendung mehrerer nebeneinander angeordneter Reiheneinheiten in einem definierten Abstand zueinander könnte auch dieser Abstand bzw. der Abstand der Pflanzenreihen als Parameter dienen. Auch könnten als Parameter jeweils Eigenschaften des Rotors dienen, bspw. welchen Durchmesser weist dieser auf oder wie viele Reihen von Zinken und/oder Bürsten sind diesem zugeordnet. So könnte vorgesehen sein, dass die Drehzahl bspw. umso kleiner ist, je größer der Durchmesser ist und umgekehrt oder dass die Drehzahl umso größer ist je größer der Durchmesser ist und umgekehrt. Auch die elastischen Eigenschaften des Rotors könnten mit beachtet werden. Generell sind somit die verschiedensten Parameter denkbar, auf Basis derer die Drehzahl und/oder Drehrichtung aber auch der Winkel und/oder die Arbeitstiefe des wenigstens einen Rotors jeweils verändert werden kann/können. Auch könnten Positionsdaten der Reiheneinheit in Bezug auf die Pflanzenreihe verwendet werden, so dass in Abhängigkeit der Drehzahl und/oder Drehrichtung die Reiheneinheit entsprechend gelenkt werden kann, wobei hierzu zusätzlich der Winkel α des Rotors entsprechend zusätzlich mit variiert bzw. mit beachtet werden kann. Um diese Funktion zu verbessern, könnte ein Messsystem vorgesehen sein, welches die jeweilige Position der Reiheneinheit in Bezug auf die Pflanzenreihe ermittelt, bspw. ein Kamerasystem oder Positionssensoren oder dergl., aber auch ein GPS-System oder dergl. könnte verwendet werden. So könnte die Reiheneinheit bzw. die landwirtschaftliche Maschine somit auch gelenkt werden. Auch könnte jeweils die Arbeitstiefe der Werkzeuge, insbesondere der Lockerungselemente und/oder der Rotoren auf Basis dieser Parameter variiert und verändert werden.

Neben den Parameter kann die Rechnereinheit auch mit einer Datenbank verbunden sein und von dieser entsprechende Parameter abrufen. Ebenso kann die Rechnereinheit auch mit einer Eingabevorrichtung ausgestattet sein, mittels derer wiederum Parameter eingegeben werden können.

Der Antrieb kann sowohl als hydraulischer und/oder pneumatischer und/oder elektrischer Antrieb bzw. Motor ausgeführt sein, wobei jeweils vorgesehen sein kann, dass durch eine Veränderung der Energiezufuhr bzw. der Veränderung der Leistung die Drehzahl erhöht oder verringert wird. Auch können die Rotoren der Reiheneinheiten jeweils mit gleichen aber auch mit verschiedenen Drehzahlen und/oder Drehrichtungen angetrieben werden.

Es sei an dieser Stelle betont, dass sich alle Merkmale und Ausführungsformen der oben erwähnten erfindungsgemäßen Reiheneinheit und der oben erwähnten erfindungsgemäßen landwirtschaftlichen Maschine sich gleichermaßen auf das nachfolgend beschriebene Verfahren übertragen lassen. Wenn also an einer oder mehreren Stelle die Rede von der Ausführungsform und/oder einer ihrer Ausführungsvarianten die Rede war, so beziehen sich die in diesem Zusammenhang definierten Merkmalskombinationen, Eigenschaften und/oder die dabei gemachten Aussagen uneingeschränkt auch auf die erfindungsgemäße Reiheneinheit bzw. die Landwirtschaftliche Maschine oder auch auf das erfindungsgemäße Verfahren.

Darüber hinaus schlägt die Erfindung zur Erreichung der vorgenannten Ziele ein Verfahren zur mechanischen Unkrautbekämpfung mit den Merkmalen des Verfahrensanspruchs 19 vor.

Ein derartiges Verfahren könnte zumindest folgende Schritte umfassen: Zunächst wird jeweils der Ackerboden mit zumindest einem, neben der Pflanzenreihe geführten Lockerungselement, gelockert bzw. aufgebrochen. Anschließend wird der gelockerte Boden bzw. das sich zwischen den Nutzpflanzen der Pflanzenreihe befindende Unkraut mit zumindest einem Rotor, welcher mit einer ersten Drehzahl und einer ersten Drehrichtung rotiert und einen Winkel α zur Pflanzenreihe aufweist, aus der Pflanzenreihe entfernt, wobei der Rotor hierzu mittig zur Pflanzenreihe angeordnet ist, jedoch auch versetzt zu dieser sein kann.

Um dies zu verbessern, könnte in einer verbesserten Ausführungsvariante des erfindungsgemäßen Verfahrens vorgesehen sein, dass an den ersten mit einer ersten Drehzahl und/oder Drehrichtung rotierenden und in einem Winkel α zur Pflanzenreihe angeordneten ersten Rotor zumindest ein zweiter Rotor folgt, welcher mit einer zweiten Drehzahl und einer zweiten Drehrichtung rotiert sowie in einem Winkel β zur Pflanzenreihe orientiert ist, wobei sowohl die Drehzahlen identisch oder verschieden sein können sowie die Drehrichtungen identisch oder verschieden sein können sowie die Winkel α und β identisch oder verschieden sein können. Auch kann die Arbeitstiefe der Rotoren jeweils verschieden sein und auf Basis verschiedenster Parameter geändert werden.

Der wenigstens eine zusätzliche Rotor kann mittig zur Pflanzenreihe, aber auch versetzt zu dieser angeordnet sein. So könnte bspw. der erste Rotor auf einer Seite der Pflanzenreihe versetzt sein und der wenigstens eine zweite Rotor auf der gegenüberliegenden Seite der Pflanzenreihe. Zumindest einer der wenigstens zwei Rotoren, aber auch beide Rotoren können mittels eines motorischen Antriebs angetrieben werden, wobei mittels dieses Antriebs die Drehzahl und/oder die Drehrichtung variabel veränderbar sind. Mit dem zweiten Rotor soll zumindest anteilmäßig vorher mittels des ersten Rotors aus der Pflanzenreihe entfernter Ackerboden wieder in die Pflanzenreihe zurückbefördert werden.

Um dies noch weiter zu verbessern bzw. um den Ackerboden der Pflanzenreihe noch gezielter zu lockern und zu positionieren, könnte in einer verbesserten Ausführungsvariante des erfindungsgemäßen Verfahrens vorgesehen sein, dass an den ersten und den zweiten Rotor zumindest ein dritter Rotor folgt, welcher mit einer dritten Drehzahl und/ oder Drehrichtung rotiert sowie in einem Winkel n zur Pflanzenreihe orientiert ist, wobei sowohl die Drehzahlen identisch oder verschieden sein können sowie die Drehrichtungen identisch oder verschieden sein können sowie die Winkel α und β und n identisch oder verschieden sein können. Auch kann die Arbeitstiefe der Rotoren jeweils verschieden sein und auf Basis verschiedenster Parameter geändert werden.

Der wenigstens eine zusätzliche Rotor kann mittig zur Pflanzenreihe, aber auch versetzt zu dieser angeordnet sein. So könnte bspw. der erste Rotor auf einer Seite der Pflanzenreihe versetzt sein und der wenigstens eine zweite Rotor auf der gegenüberliegenden Seite der Pflanzenreihe, sowie der dritte Rotor mittig zur Pflanzenreihe. Auch könnte der erste Rotor mittig zur Pflanzenreihe angeordnet sein und der zweite und der dritte Rotor jeweils versetzt zur Pflanzenreihe und gegenüberliegen zueinander angeordnet sein. Zumindest ein Rotor, aber auch alle Rotoren können mittels eines motorischen Antriebs angetrieben werden, wobei mittels dieses Antriebs die Drehzahl und/oder die Drehrichtung variabel veränderbar sind. Mit dem dritten Rotor soll zumindest anteilmäßig vorher mittels des ersten Rotors aus der Pflanzenreihe entfernter Ackerboden sowie mittels des zweiten Rotors wieder in die Pflanzenreihe zurückbefördert Ackerboden, vergleichmäßigt bzw. eingeebnet werden.

Der Antrieb kann sowohl als hydraulischer und/oder pneumatischer und/oder elektrischer Antrieb bzw. Motor ausgeführt sein, wobei die Drehzahl bspw. durch eine Veränderung der Energiezufuhr, d.h. durch eine Erhöhung oder Verminderung eines Drucks oder einer Erhöhung oder Verminderung der zugeführten Leistung verändert werden kann. Auch können die Rotoren der Reiheneinheiten jeweils mit gleichen aber auch mit verschiedenen Drehzahlen angetrieben werden.

Mittels des ersten Rotors soll insbesondere jeweils Ackerboden und Unkraut aus der Pflanzenreihe entfernt werden, sowie mittels des zweiten Rotors wiederum zumindest anteilsmäßig Ackerboden wieder in die Pflanzenreihe zurück befördert werden, um somit eine ausreichend Abdeckung der Nutzpflanzen bzw. von deren Wurzeln sicherzustellen. Hierfür können jeweils an zumindest einem Rotor die Drehzahl und/oder die Drehrichtung verändert werden, wobei dies wiederum in Abhängigkeit verschiedenster, oben beschriebener Parameter erfolgt. Auch können drei oder mehr Rotoren vorgesehen sein, um dies noch weiter zu verbessern.

Sowohl bei einem Verfahren mit einem Rotor als auch bei einem Verfahren mit zwei oder mehr Rotoren, kann an diese(n) jeweils zumindest ein Zustreicher anschließen, mit welchem in einem weiteren Verfahrensschritt wiederum Ackerboden zumindest anteilsmäßig in die Pflanzenreihe zurückgeführt wird, bzw. seitlich neben die Pflanzenreihe zurückgeführt wird, um somit eine ausreichende Bedeckung der Pflanzenreihe bzw. deren Nutzpflanzen mit Ackerboden zu erreichen. Ein derartiger Zustreicher kann wiederum sowohl links als auch rechts neben der Pflanzenreihe geführt werden, jedoch auch nur auf einer Seite. Auch können diese in Fahrtrichtung zueinander versetzt angeordnet sein.

Die Komponenten der Reiheneinheiten, insbesondere die ein oder mehreren Rotoren, können mittels eines Steuerprogramms bzw. einer Steuerung angesteuert und deren Drehzahl und/oder Drehrichtung aber auch deren Winkel entsprechend variabel verändert werden, wobei wiederum die Ansteuerung des Antriebs mittels einer Rechnereinheit bzw. mittels eines in einer Rechnereinheit hinterlegten Regelprogramms erfolgt. Neben der Rechnereinheit könnte hier jedoch auch eine Steuerung bspw. eine hydraulische oder pneumatische oder elektrische Steuerung oder eine Kombination aus diesen Systemen zur Ansteuerung des Antriebs vorgesehen sein. In der Rechnereinheit bzw. mittels der Steuerung werden verschiedenste Parameter verarbeitet, auf Basis welcher Parameter anschließend der Antrieb angesteuert wird. Als Parameter zur Veränderung der Drehzahl und/oder Drehrichtung, aber auch des Winkels kann bspw. die Fahrgeschwindigkeit, mit der die Reiheneinheit über eine Ackerfläche bewegt wird, verwendet werden. Ein weiterer Parameter könnte bspw. die Pflanzenbestandsdichte bzw. die Art und das jeweilige Wachstumsstadium der Nutzpflanzen in der Pflanzenreihe sein, aber auch der jeweilige Unkrautbefall könnte entsprechend mit betrachtet werden.

Bei Verwendung mehrerer nebeneinander angeordneter Reiheneinheiten in einem definierten Abstand zueinander könnte auch dieser Abstand bzw. der Abstand der Pflanzenreihen als Parameter dienen. Auch könnten als Parameter jeweils Eigenschaften des Rotors dienen, bspw. welchen Durchmesser weist dieser auf oder wie viele Reihen von Zinken und/oder Bürsten sind diesem zugeordnet. So könnte vorgesehen sein, dass die Drehzahl bspw. umso kleiner ist, je größer der Durchmesser ist und umgekehrt, oder dass die Drehzahl umso größer ist, je größer der Durchmesser ist und umgekehrt. Auch die elastischen Eigenschaften des Rotors könnten mit beachtet werden.

Generell sind somit die verschiedensten Parameter denkbar, auf Basis derer die Drehzahl und/oder Drehrichtung aber auch der Winkel und/oder die Arbeitstiefe des wenigstens einen Rotors jeweils verändert werden kann/können. Auch könnten Positionsdaten der Reiheneinheit in Bezug auf die Pflanzenreihe verwendet werden, so dass in Abhängigkeit der Drehzahl und/oder Drehrichtung die Reiheneinheit entsprechend gelenkt werden kann, wobei hierzu zusätzlich der Winkel α des Rotors entsprechend zusätzlich mit variiert bzw. mit beachtet werden kann. Um diese Funktion zu verbessern, könnte ein Messsystem vorgesehen sein, welches die jeweilige Position der Reiheneinheit in Bezug auf die Pflanzenreihe ermittelt, bspw. ein Kamerasystem oder Positionssensoren oder dergl. aber auch ein GPS-System oder dergl. könnte verwendet werden. So könnte die Reiheneinheit bzw. die landwirtschaftliche Maschine somit auch gelenkt werden. Auch könnte jeweils die Arbeitstiefe der Werkzeuge, insbesondere der Lockerungselemente und/oder der Rotoren auf Basis dieser Parameter variiert und verändert werden.

Neben den Parametern kann die Rechnereinheit auch mit einer Datenbank verbunden sein und von dieser entsprechende Parameter abrufen. Ebenso kann die Rechnereinheit auch mit einer Eingabevorrichtung ausgestattet sein, mittels derer wiederum Parameter eingegeben werden können.

Der Antrieb kann sowohl als hydraulischer und/oder pneumatischer und/oder elektrischer Antrieb bzw. Motor ausgeführt sein, wobei jeweils vorgesehen sein kann, dass durch eine Veränderung der Energiezufuhr bzw. der Veränderung der Leistung die Drehzahl erhöht oder verringert wird. Auch können die Rotoren der Reiheneinheiten jeweils mit gleichen aber auch mit verschiedenen Drehzahlen und/oder Drehrichtungen angetrieben werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen hierbei nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Figur 1a: Eine Perspektivansicht einer Ausführungsvariante einer landwirtschaftlichen Maschine zur mechanischen Unkrautbekämpfung mit sechs Reiheneinheiten, wobei jede Reiheneinheit jeweils einen Rotor aufweist.
- Figur 1b: Eine Seitenansicht einer landwirtschaftlichen Maschine gemäß Figur 1a.
- Figur 1c: Eine Ansicht von hinten einer landwirtschaftlichen Maschine gemäß Figur 1a.
- Figur 1d: Eine Draufsicht einer landwirtschaftlichen Maschine gemäß Figur 1a.
- Figur 2a: Eine Perspektivansicht einer Ausführungsvariante einer landwirtschaftlichen Maschine zur mechanischen Unkrautbekämpfung mit zwölf Reiheneinheiten, wobei jede Reiheneinheit jeweils einen Rotor aufweist.
- Figur 2b: Eine Perspektivansicht der landwirtschaftlichen Maschine gemäß Figur 2a in Transportstellung.
- Figur 3a: Eine Perspektivansicht einer Ausführungsvariante einer landwirtschaftlichen Maschine zur mechanischen Unkrautbekämpfung mit vier Reiheneinheiten, wobei jede Reiheneinheit jeweils zwei entgegengesetzt zueinander angeordnete und identisch aufgebaute Rotoren aufweist.
- Figur 3b: Eine Seitenansicht einer landwirtschaftlichen Maschine gemäß Figur 3a.
- Figur 3c: Eine Ansicht von hinten einer landwirtschaftlichen Maschine gemäß Figur 3a.
- Figur 3d: Eine Draufsicht einer landwirtschaftlichen Maschine gemäß Figur 3a.
- Figur 4a: Eine Perspektivansicht einer Ausführungsvariante einer landwirtschaftlichen Maschine zur mechanischen Unkrautbekämpfung mit vier Reiheneinheiten, wobei jede Reiheneinheit jeweils zwei entgegengesetzt zueinander angeordnete und unterschiedlich aufgebaute Rotoren aufweist.
- Figur 4b: Eine Seitenansicht einer landwirtschaftlichen Maschine gemäß Figur 4a.
- Figur 4c: Eine Ansicht von hinten einer landwirtschaftlichen Maschine gemäß Figur 4a.
- Figur 4d: Eine Draufsicht einer landwirtschaftlichen Maschine gemäß Figur 4a.
- Figur 5a: Eine Perspektivansicht einer Ausführungsvariante einer Reiheneinheit sowie deren Werkzeuge bzw. Komponenten und unterschiedlich aufgebaute Rotoren.
- Figur 5b: Eine Draufsicht einer Reiheneinheit gemäß Figur 5a.
- Figur 5c: Eine Seitenansicht einer Reiheneinheit gemäß Figur 5a.
- Figur 5d: Eine Ansicht von hinten einer Reiheneinheit gemäß Figur 5a.
- Figur 6a: Eine Perspektivansicht einer Ausführungsvariante einer Reiheneinheit sowie deren Werkzeuge bzw. Komponenten und identisch aufgebaute Rotoren.
- Figur 6b: Eine Draufsicht einer Reiheneinheit gemäß Figur 6a.
- Figur 6c: Eine Seitenansicht einer Reiheneinheit gemäß Figur 6a.
- Figur 6d: Eine Ansicht von hinten einer Reiheneinheit gemäß Figur 6a.
- Figur 7a - 7c: Eine Ausführungsvariante eines zweireihigen Rotors in einer Perspektivansicht (vergl. Fig. 7a), einer Vorderansicht (vergl. Fig 7b) sowie einer Draufsicht (vergl. Fig. 7c), wobei die Zinken mittels eines Striegels gebildet werden.
- Figur 8a - 8c: Eine Ausführungsvariante eines dreireihigen Rotors in einer Perspektivansicht (vergl. Fig 8a), einer Vorderansicht (vergl. Fig 8b) sowie einer Draufsicht (vergl. Fig. 8c), wobei die Zinken mittels eines Striegels gebildet werden.
- Figur 9a - 9c: Eine Ausführungsvariante eines dreireihigen Rotors wobei wiederum jede Reihe zweireihig ausgeführt ist, in einer Perspektivansicht (vergl. Fig 9a), einer Vorderansicht (vergl. Fig 9b) sowie einer Draufsicht (vergl. Fig. 9c), wobei die Zinken mittels eines Striegels gebildet werden.
- Figur 10a - 10c: Eine Ausführungsvariante eines vierreihigen Rotors, in einer Perspektivansicht (vergl. Fig 10a), einer Vorderansicht (vergl. Fig 10b) sowie einer Draufsicht (vergl. Fig. 10c), wobei die Zinken mittels eines Rundstahls gebildet werden.
- Figur 11a - 11c: Eine weitere Ausführungsvariante eines dreireihigen Rotors, in einer Perspektivansicht (vergl. Fig 11a), einer Vorderansicht (vergl. Fig 11b) sowie einer Draufsicht (vergl. Fig. 11c), wobei die Zinken mittels eines Rundstahls gebildet werden.
- Figur 12a - 12c: Eine Ausführungsvariante eines dreireihigen Rotors mit motorischem Antrieb in verschiedenen Perspektiven, wobei die Zinken mittels eines Striegels gebildet werden.
- Figur 13a - 13c: Eine Ausführungsvariante eines dreireihigen Rotors mit motorischem Antrieb in verschiedenen Perspektiven, wobei die Zinken mittels eines Rundstahls gebildet werden.
- Figur 14a - 14c: Eine Ausführungsvariante eines vierreihigen Rotors mit motorischem Antrieb in verschiedenen Perspektiven, wobei die Zinken mittels eines Rundstahls gebildet werden.
- Figur 15a - 15f: Verschiedene Ausführungsformen von Lockerungselementen mit und ohne zusätzlichen Scharkörper (vergl. Fig. 15a und 15e) sowie mit Schneiden.
- Figur 16: Ein schematisches Blockschaltbild der Regelung der Drehzahl und/oder der Drehrichtung des wenigstens einen Rotors.

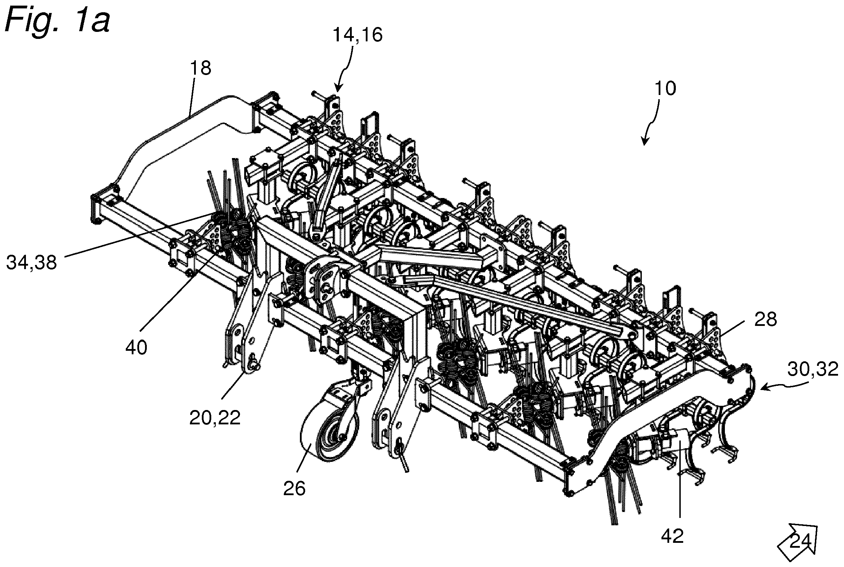

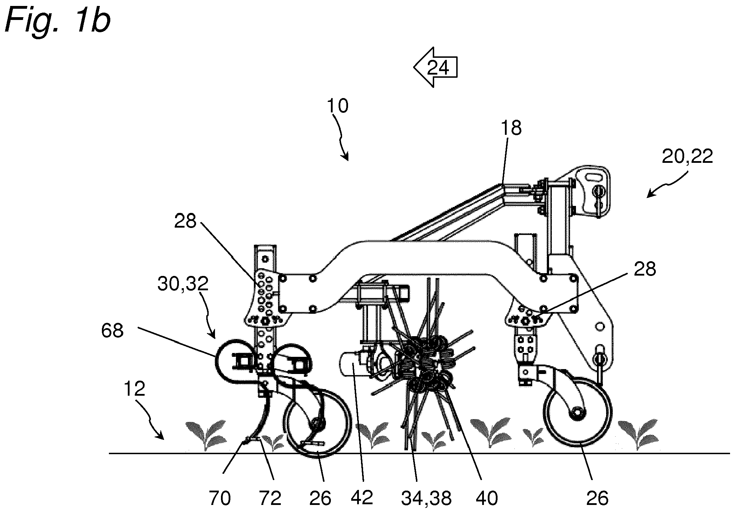

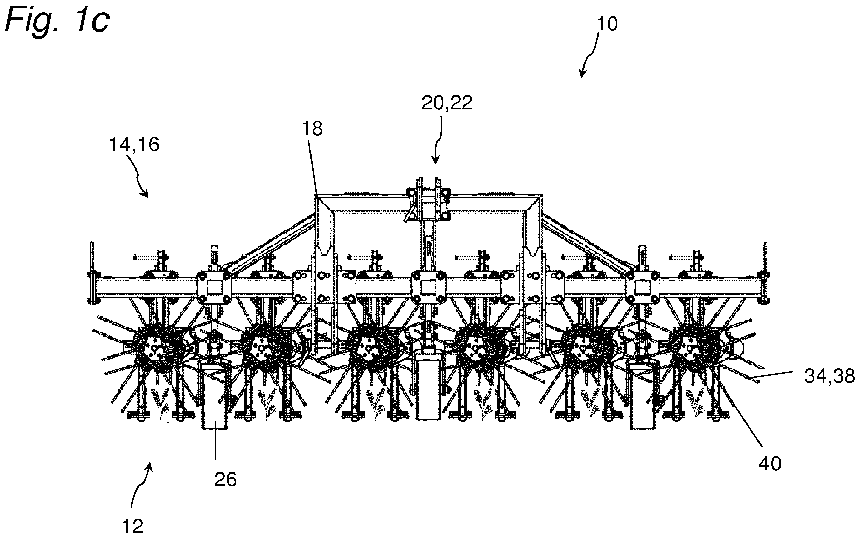

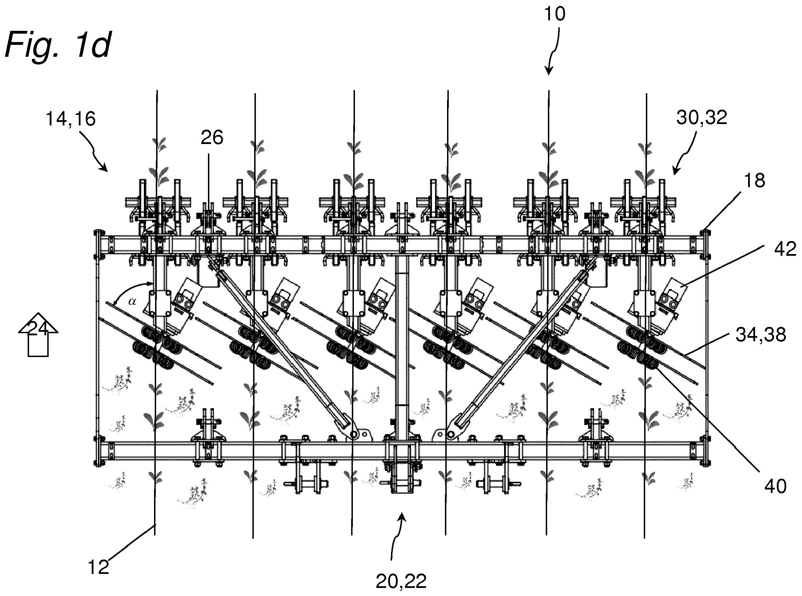

Für gleiche oder gleich wirkende Elemente der Erfindung werden in den Figuren 1 bis 16 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Reiheneinheit und die erfindungsgemäße landwirtschaftliche Maschine sowie das erfindungsgemäße Verfahren ausgestaltet sein können und stellen keine abschließende Begrenzung dar.

Eine Ausführungsvariante einer landwirtschaftlichen Maschine 10 zur mechanischen Unkrautbekämpfung von in Pflanzenreihen 12 stehenden Kulturpflanzen geht aus den Figuren 1a bis 1d hervor, wobei Figur 1a eine Perspektivansicht, Figur 1b eine Seitenansicht, Figur 1c eine Ansicht von hinten sowie Figur 1d eine Draufsicht der landwirtschaftlichen Maschine 10 zeigen. Zur Unkrautbekämpfung sind der landwirtschaftlichen Maschine 10 vier Reiheneinheiten 14, welche wiederum aus verschiedensten Werkzeugen 16 bestehen zugeordnet.

Die landwirtschaftliche Maschine 10 weist einen Rahmen 18 auf, mittels welchem die jeweiligen Werkzeuge 16 bzw. Komponenten der landwirtschaftlichen Maschine 10 bzw. der Reiheneinheit 14 getragen werden. Der Rahmen 18 weist eine Anhängevorrichtung 20 auf, wobei diese im Ausführungsbeispiel der Figuren 1 als Dreipunktanhängung 22 ausgebildet ist, es wären jedoch auch andere Anhängungen denkbar wie bspw. eine Zugdeichsel oder dergl., wobei die Dreipunktanhängung 22 in Bezug auf die Fahrrichtung 24 am hinteren Bereich der landwirtschaftlichen Maschine 10 angebracht ist. Im vorderen und hinteren Bereich der landwirtschaftlichen Maschine 10 sind an deren Rahmen 18 höhenverstellbare Tiefenführungselemente 26 in Form von Tiefenführungsrollen bzw. Tiefenführungsräder angebracht. Mittels dieser Tiefenführungselemente 26 kann die Arbeitstiefe der landwirtschaftlichen Maschine 10 verstellt werden, wobei es ebenso denkbar wäre, dass die Tiefenführungselemente 26 nicht verstellbar mit dem Rahmen 18 verbunden sind und die Arbeitstiefe durch eine Verstellung der Reiheneinheit 14 bzw. dessen Werkzeuge 16 erfolgt. Die Verstellung der Tiefenführungselemente 26 erfolgt jeweils mittels Lochkulissen 28, bei denen Absteckbolzen bzw. Absteckschrauben oder dergl. jeweils die Position fixierbar ist, ebenso denkbar wäre jedoch auch eine stufenlose Verstellung bspw. mittels Zylinder oder Linear- oder Spindel- oder dergl. Verstellelemente.

Zur mechanischen Unkrautbekämpfung weist die landwirtschaftliche Maschine 10 vier Reiheneinheiten 14 auf, wobei die Reiheneinheiten 14 jeweils in Bezug auf die Fahrrichtung von vorne nach hinten zunächst Lockerungselemente 30 aufweisen, welche jeweils links und rechts neben einer Pflanzenreihe 12 angeordnet sind. Mittels der Lockerungselemente 30 wird der Ackerboden neben der Pflanzenreihe 12 gelockert und aufgebrochen und somit Unkraut bzw. ungewünschte Pflanzen wie bspw. Gräser entsprechend entfernt. Die Lockerungselemente 30 sind zweireihig angeordnet, wobei sich jeweils zwei Lockerungselemente 30 in einer Ebene befinden. Es wäre jedoch auch denkbar, dass diese zueinander versetzt angeordnet sind, wobei jedoch die jeweils innenliegenden Lockerungselemente 30 einen Abstand zueinander aufweisen der so groß ist, um zwar so nah wie möglich an die Pflanzenreihe 12 heranzureichen, jedoch die Nutzpflanzen der Pflanzenreihe 12 nicht zu beschädigen. Die Lockerungselemente 30 sind als Federzinken 32 ausgeführt, wobei auch anderen Lockerungselemente 30 verwendet werden können, wie bspw. Schneidscheiben oder dergl., bevorzugt finden jedoch Federzinken 32 Verwendung da mittels dieser jeweils der Ackerboden, durch die vorhandenen Vibrationen, zusätzlich gelockert und gebrochen wird und zusätzlich bei Federzinken 32 keine weiteren Federelemente oder Lagerungen oder dergl. für eine Bodenbearbeitung benötigt werden.

Anschließend an die Lockerungselemente 30 folgt ein, in einem Winkel α bzw. schräg zur Pflanzenreihe 12 bzw. zur Fahrrichtung 24 angeordneter Rotor 34, welchem Rotor 34 an dessen kreisförmigen Umfang 36 eine Vielzahl von Zinken 38 zugeordnet sind, wobei die Zinken 38 durch Striegelelemente 40 gebildet werden. Die Zinken 38 sind darüber hinaus zweireihig am Rotor angebracht. Die Zinken 38 sind jeweils so gefertigt bzw. am Umfang angebracht, dass diese sich elastisch Verformen können um somit Beschädigungen vorbeugen zu können.

Eine Arbeitsweise der landwirtschaftlichen Maschine 10 gemäß der Figuren 1a bis 1d könnte wie folgt sein: zunächst wird der Ackerboden neben der Pflanzenreihe 12 mit Hilfe der Lockerungselemente 30 gelockert bzw. aufgebrochen, anschließend wird der gelockerte Boden und sich zwischen den Nutzpflanzen der Pflanzenreihe 12 befindendes Unkraut mit einem Rotor 34, welcher mit einer variabel veränderbaren Drehzahl und/oder Drehrichtung 44 rotiert, aus der Pflanzenreihe 12 entfernt, wobei der Rotor 34 mittig zur Pflanzenreihe 12 angeordnet ist, aber auch zu dieser versetzt sein kann.

Die Rotoren 34 werden jeweils mittels eines motorischen Antriebes 42 angetrieben, wobei die Drehzahl und/oder Drehrichtung 44 hierbei jeweils auf Basis verschiedenster Parameter variabel veränderbar bzw. einstellbar ist und bspw. aufgrund der Fahrgeschwindigkeit 46 der landwirtschaftlichen Maschine 10 verändert werden kann, wobei diese Drehzahlanpassung und/oder Drehrichtungsanpassung wiederum manuell durch eine Bedienperson aber auch automatisiert erfolgen kann. Auch kann die Drehzahl und/oder Drehrichtung 44 in Abhängigkeit der Pflanzenbestanddichte in der Pflanzenreihe 12 verändert werden. Mittels des Rotors 34 kann somit das sich zwischen den Pflanzen der Pflanzenreihe 12 befindliche Unkraut beseitigt werden. Auch kann der mittels der Lockerungselemente 30 zuvor gelockerte Ackerboden, welcher in die Pflanzenreihe 12 gefördert wurde, wieder aus dieser entfernt werden, wobei auch hierfür wiederum die Drehzahl und/oder Drehrichtung 44 entsprechend erhöht oder verringert werden kann, um somit bspw. das Unkraut nicht in eine andere bzw. benachbarte Pflanzenreihe 12 zu befördern.

Die Drehzahl und/oder Drehrichtung können somit bspw. auch in Abhängigkeit der Reihenabstände, also in Abhängigkeit der Abstände zwischen zwei Reiheneinheiten 12 entsprechend variabel eingestellt werden. Auch kann die Drehzahl und/oder Drehrichtung 44 in Abhängigkeit des Durchmesser des Rotors 34 entsprechend variiert werden, so dass bspw. die Drehzahl 44 umso kleiner ist, je größer der Durchmesser ist und umgekehrt, oder dass die Drehzahl umso größer ist, je größer der Durchmesser ist und umgekehrt. Generell sind somit die verschiedensten Parameter 48 denkbar, auf Basis derer die Drehzahl und/oder Drehrichtung 44 des Rotors 34 jeweils verändert werden kann, wobei die Drehzahl und/oder Drehrichtung 44 manuell durch eine Bedienperson oder mittels einer Steuerung verändert werden kann. Auch kann die Drehzahl und/oder Drehrichtung 44 auf Basis von einem in einer Rechnereinheit 50 hinterlegten Steuerprogramm erfolgen, wobei in der Steuerung und/oder im Steuerprogramm jeweils verschiedenste Parameter 48 verarbeitet werden können. Diese Parameter 48 können bspw. mittels verschiedenster Messmittel 52 erfasst werden. Zusätzlich könnte darüber hinaus noch vorgesehen sein, dass auf Basis dieser Parameter 48 und/oder in Abhängigkeit der Drehzahl und/oder Drehrichtung 44 auch der Winkel α und/oder die Arbeitstiefe des Rotors 34 geändert wird.

Der Antrieb 42 kann sowohl als hydraulischer und/oder pneumatischer und/oder elektrischer Antrieb bzw. Motor ausgeführt sein, wobei bspw. durch eine Veränderung der Energiezufuhr bzw. durch eine Veränderung der Leistung die Drehzahl 44 erhöht oder verringert werden kann. Auch können die Rotoren 34 der Reiheneinheiten 14 jeweils mit gleichen aber auch mit verschiedenen Drehzahlen und/oder Drehrichtungen 44 angetrieben werden.

Wie aus dem Ausführungsbeispiel der Figuren 1 ersichtlich ist, sind die Lockerungselemente 30 höhenverstellbar sowie die Rotoren 34 nicht höhenverstellbar am Rahmen 18 angebracht, wobei die Lockerungselemente 30 und die Rotoren 34 jeweils getrennt voneinander am Rahmen 12 montiert sind. Es wäre jedoch auch denkbar, dass diese jeweils an einem gemeinsamen Träger montiert sind, welcher Träger wiederum höhenverstellbar mit dem Rahmen 12 verbunden sein kann, wobei ebenso am Träger sowohl die Lockerungselemente 30 als auch die Rotoren 34 höhenverstellbar angebaut sein können. Auch könnten bspw. nur die Lockerungselemente 30 oder nur die Rotoren 34 am Träger höhenverstellbar angebracht sein. Insbesondere sind die Lockerungselemente 30 und die Rotoren 34 aber so angeordnet, dass die Lockerungselemente 30 eine größere Arbeitstiefe als die Rotoren 34 aufweisen, wobei diese Differenz bspw. größer oder gleich 20mm ist, insbesondere jedoch größer oder gleich 50mm ist. Auch wäre es denkbar, dass wiederum die in zwei Reihen angeordneten Lockerungselemente 30 zueinander höhenverstellbar sind, bzw. diese derartig zueinander angeordnet sind, dass diese verschiedene Arbeitstiefen erreichen. So könnte bspw. das vordere Lockerungselement 30 eine größere Arbeitstiefe als das hintere aufweisen, wobei auch hier wieder eine Differenz vorhanden sein kann, welche bspw. größer oder gleich 20mm ist, vorzugsweise jedoch größer oder gleich 50mm ist.

Die Rotoren 34 sind jeweils schräg bzw. in einem Winkel α zur Fahrtrichtung bzw. zu den Pflanzenreihen 12 angeordnet, wobei dieser Winkel α wiederum veränderbar und von verschiedensten Parametern 50 abhängig sein kann und sowohl manuell durch eine Bedienperson aber auch automatisch verändert werden kann. Um jedoch einen möglichst einfachen Aufbau der Reiheneinheit 14 zu erreichen, ist dieser Winkel α vorzugsweise nicht veränderbar, wobei der Winkel α kleiner oder gleich 90° ist, insbesondere jedoch kleiner oder gleich 75° ist. Dieser Winkel kann wiederum an allen Reiheneinheiten 14 gleich groß sein; dies ist insbesondere dann von Vorteil, wenn die Reiheneinheiten 14 jeweils geringe Abstände zueinander aufweisen, um somit Kollisionen und Beeinträchtigungen von benachbarten Reiheneinheiten 14 vermeiden zu können. Auch könnte der Winkel α jedoch unterschiedlich sein.

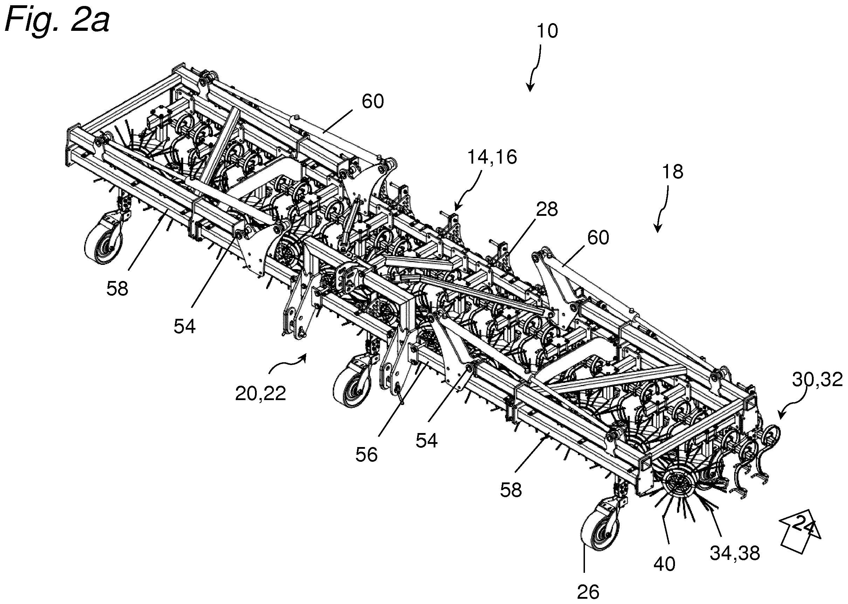

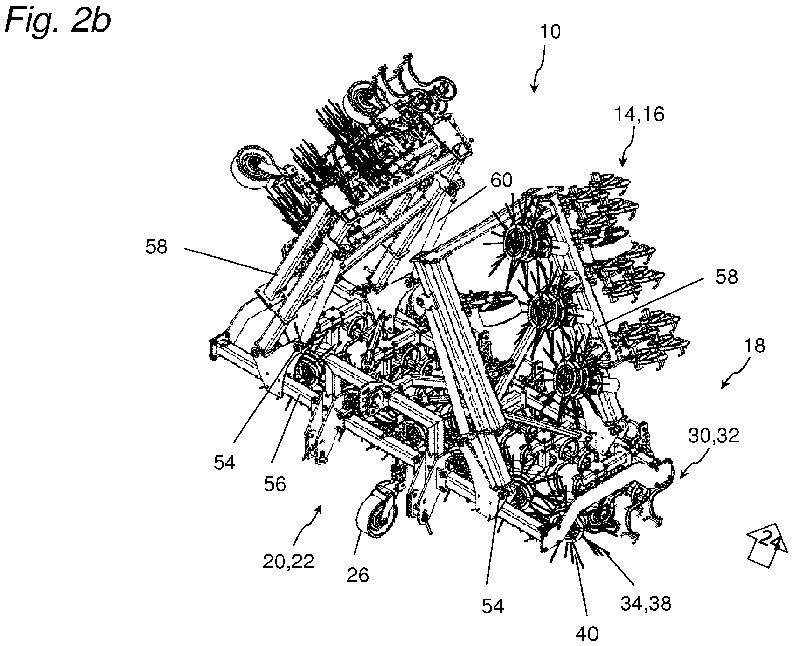

Eine weitere Ausführungsvariante einer landwirtschaftlichen Maschine 10 zur mechanischen Unkrautbekämpfung geht aus den Figuren 2a und 2b hervor, wobei die Figur 2a diese in einer Perspektivansicht in Arbeitsposition sowie die Figur 2b diese in einer Perspektivansicht in Transportposition zeigt. Der Aufbau der Reiheneinheiten 14 bzw. die Anordnung der Werkzeuge 16 der Reiheneinheiten 14 ist identisch zu den in Figur 1 beschriebenen, wobei hier jedoch insgesamt 12 Reiheneinheiten 14 vorhanden sind, wodurch die landwirtschaftliche Maschine 10 eine größere Arbeitsbreite erreicht. Da eine derart breite landwirtschaftliche Maschine 10 nicht auf öffentlichen Straßen bewegt werden darf, wird diese für eine Straßenfahrt um horizontale Achsen 54 verschwenkt (vergl. Fig. 2b), wobei hierfür der Rahmen 18 jedoch in drei Abschnitte, bestehend aus einem Mittelteil 56 und jeweils links und rechts davon angeordnete Seitenteile 58, unterteilt ist. An jedem der drei Abschnitte sind Reiheneinheiten 14 und Tiefenführungselemente 26 angeordnet. Zum Verschwenken der Seitenteile 58 zum Mittelteil 56 sind zwischen diesen jeweils zwei Linearantriebe 60 in Form von hydraulisch arbeitenden Zylindern angeordnet, wobei hierfür auch andere Antriebsarten denkbar wären. Um die auf eine Achse des Zugfahrzeuges wirkende Belastung während einer Straßenfahrt zu minimieren, kann darüber hinaus am Mittelteil 56 bzw. am Rahmen 18 der landwirtschaftlichen Maschine 10 ein oder mehrere Laufräder angebracht sein, wobei diese Laufräder auch als Tiefenführungselemente 26 verwendet werden können.

Die Rotoren 34 sind im Ausführungsbeispiel der Figuren 2 dreireihig ausgeführt, d.h. am Umfang 36 der Rotoren 34 sind jeweils eine Vielzahl von Zinken 38 angebracht, wobei die Zinken 38 hierbei durch Rundstahl bzw. Stahlelemente 62 gebildet sind. Die Stahlelemente 62 sind in deren Querschnitt zudem so gewählt, dass diese sich elastisch Verformen können.

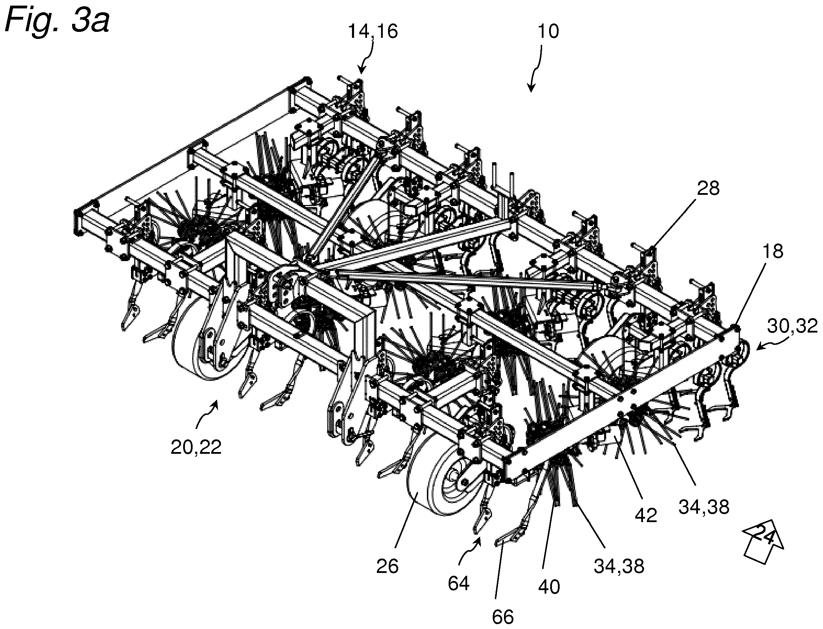

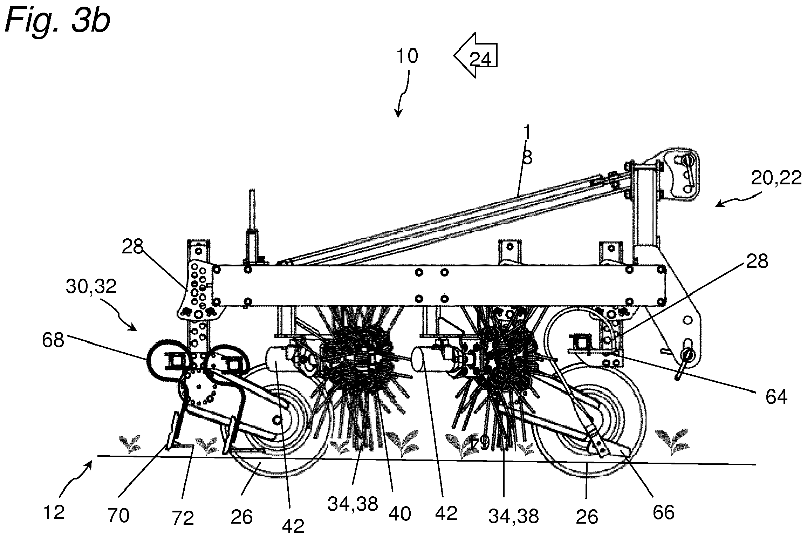

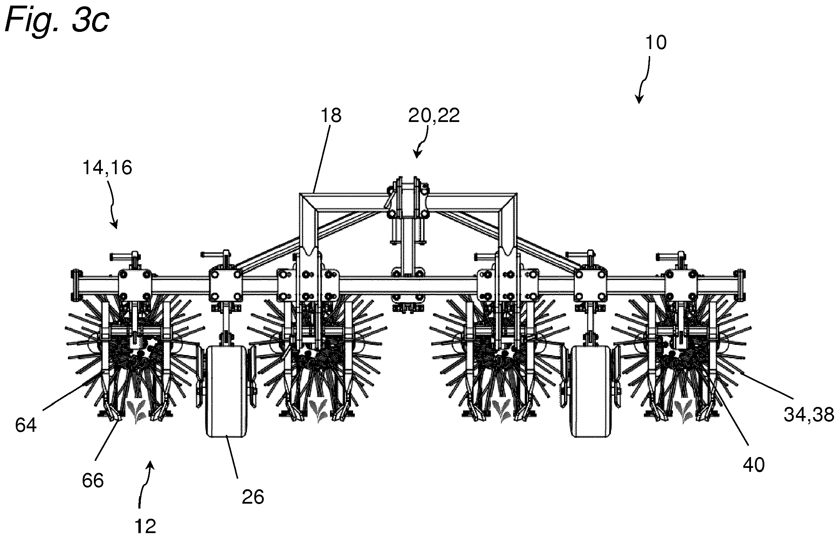

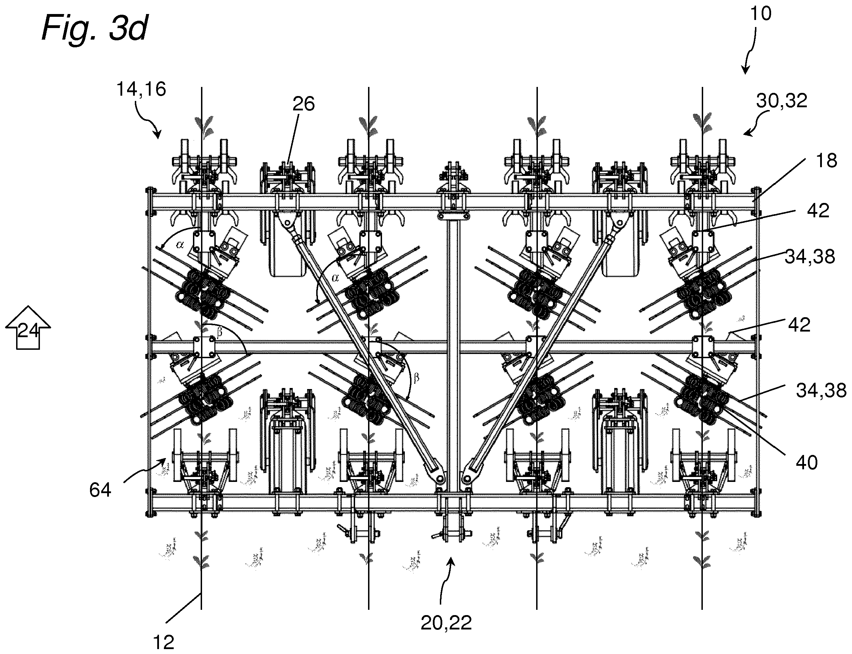

Eine weitere Ausführungsvariante einer landwirtschaftlichen Maschine 10 zur mechanischen Unkrautbekämpfung geht aus den Figuren 3a bis 3d hervor; hierbei zeigt die Figur 3a eine Perspektivansicht, die Figur 3b eine Seitenansicht, die Figur 3c eine Ansicht von hinten sowie die Figur 3d eine Draufsicht der landwirtschaftlichen Maschine 10. Zur Unkrautbekämpfung sind der landwirtschaftlichen Maschine 10 vier Reiheneinheiten 14 zugeordnet.

Die landwirtschaftliche Maschine 10 besitzt einen Rahmen 18, an welchem die jeweiligen Werkzeuge 16 bzw. die jeweiligen Komponenten der landwirtschaftlichen Maschine 10 bzw. der Reiheneinheiten 14 angebaut werden. Der Rahmen 18 weist eine Anhängevorrichtung 20 bzw. eine Dreipunktanhängung 22 auf. Mit dieser Anhängevorrichtung 20 kann die landwirtschaftliche Maschine 10 mit einem hier nicht dargestellten Zugfahrzeug verbunden werden, wobei die Anhängevorrichtung 20 sowohl in den Figuren 1 als auch in den Figuren 2 und 3 so aufgebaut ist, dass die landwirtschaftliche Maschine 10 an einen Frontanbau des Zugfahrzeuges angebaut werden kann, wobei die Anhängevorrichtung 20 auch derart sein kann, dass die landwirtschaftliche Maschine 10 am Heck des Zugfahrzeuges angehängt oder angebaut werden kann.

Sowohl im vorderen als auch im hinteren Bereich sind am Rahmen 18 höhenverstellbare Tiefenführungselemente 26 in Form von Tiefenführungsrädern angebracht. Mit Hilfe dieser kann die Arbeitstiefe der landwirtschaftlichen Maschine 10 verstellt bzw. die landwirtschaftliche Maschine 10 mit konstanter Arbeitstiefe entlang einer Ackerfläche geführt werden. Die Verstellung der Tiefenführungselemente 26 erfolgt mittels Lochkulissen 28, bei welchen bspw. mit Absteckbolzen oder dergl. Absteckelementen jeweils die Position dieser und somit die Tiefe eingestellt werden kann, wobei auch hier wiederum eine stufenlose Verstellung bspw. mittels eines Linearantriebs oder Spindelantrieb denkbar wäre.

Zur mechanischen Unkrautbekämpfung sind der landwirtschaftlichen Maschine 10 vier Reiheneinheiten 14 zugeordnet, wobei diese in Bezug auf die Fahrrichtung 24 von vorne nach hinten zunächst Lockerungselemente 30 aufweisen, welche jeweils links und rechts neben einer Pflanzenreihe 12 angeordnet sind. Mit den Lockerungselementen 30 soll der Ackerboden neben der Pflanzenreihe 12 gelockert und aufgebrochen werden, um somit zum einen Unkraut zu entfernen und zum anderen den Ackerboden zu durchlüften. Die Lockerungselemente 30 sind zweireihig angeordnet, wobei sich jeweils zwei Lockerungselemente 30 in einer Ebene befinden; es wäre jedoch auch denkbar, dass diese zueinander versetzt angeordnet sind. Die innenliegenden Lockerungselemente 30 weisen einen Abstand zueinander auf, der derartig gewählt ist, dass diese zwar möglichst nahe an die Pflanzenreihe 12 heranreichen, die Pflanzen in der Pflanzenreihe 12 jedoch nicht beschädigt werden. Die Lockerungselemente 30 sind als Federzinken 32 ausgeführt, wobei auch andere Lockerungselemente 30 denkbar sind.

An die Lockerungselemente 30 folgen zwei, in einem Winkel α und Winkel β bzw. schräg zur Pflanzenreihe 12 bzw. zur Fahrtrichtung 24 angeordnete, baugleiche Rotoren 34, wobei deren Ausrichtung wiederum jeweils entgegengesetzt zueinander ist. Ebenso sind jeweils die benachbarten Rotoren 34 von zwei Reiheneinheiten 14 entgegengesetzt zueinander, wobei diese sowohl in der Reiheneinheit 14 als auch bei benachbarten Reiheneinheiten 14 die gleiche Ausrichtung aufweisen könnten. Den Rotoren 34 sind an deren Umfang 36 eine Vielzahl von Zinken 38 zugeordnet, wobei die Zinken 38 jeweils durch Striegelelemente 40 gebildet werden. Die Zinken 38 sind darüber hinaus dreireihig am Rotor 34 angebracht. Zudem sind die Zinken 38 jeweils so ausgebildet, dass diese elastisch verformbar sind, um somit Beschädigungen vorzubeugen. Die Winkel α und β der Rotoren können wiederum veränderbar und ebenso von verschiedensten Parametern 48 abhängig sein, wobei die Winkel α und β jeweils kleiner oder gleich 90° sind, insbesondere jedoch kleiner oder gleich 75° sind, wobei die Rotoren 34, aufgrund des motorischen Antriebs 42 auch waagerecht zur Pflanzenreihe angeordnet sein könnten. Auch können die Rotoren 34 einer Reiheneinheit 14 unterschiedliche Winkel α und Winkel β sowie Ausrichtungen zueinander aufweisen, aber auch identisch sein.

Die Rotoren 34 werden jeweils mittels eines motorischen Antriebs 42 angetrieben, wobei deren Drehzahl und/oder Drehrichtung 44 variabel veränderbar bzw. einstellbar sind. Auch wäre es denkbar, dass jeweils nur ein Rotor 34 motorisch angetrieben wird und der nicht motorisch angetriebene mittels Bodenantrieb in Rotation gebracht wird. Insbesondere wäre es denkbar, dass der mittels Bodenantrieb angetriebene Rotor 34 in Fahrrichtung 24 rotiert und der motorisch angetriebene entgegengesetzt zur Fahrrichtung 24.

Die Drehzahl und/oder Drehrichtung 44 kann sowohl manuell durch eine Bedienperson als auch automatisiert verändert werden, wobei dies wiederum auf Basis verschiedenster Parameter 48 erfolgen kann. So kann bspw. ein Parameter 48 die Fahrgeschwindigkeit 46 der landwirtschaftlichen Maschine 10 sein, ein weiterer Parameter 48 kann bspw. die Pflanzenbestandsdichte an Nutzpflanzen in der Pflanzenreihe 12 sein. Auch kann der jeweilige Reihenabstand als Parameter 48 verwendet werden so dass bspw. die Drehzahl 44 bei einem Reihenabstand von 45cm kleiner als bei einem Reihenabstand von 75cm ist. Des Weiteren könnte der Durchmesser des Rotors 34 als Parameter 48 verwendet werden, so dass bspw. die Drehzahl 44 umso kleiner ist, je größer der Durchmesser ist und umgekehrt, oder dass die Drehzahl umso größer ist, je größer der Durchmesser ist und umgekehrt.

Die Parameter 48 können jeweils von einer Bedienperson verwendet werden, um somit die Drehzahl und/oder die Drehrichtung 44 manuell zu ändern; die Parameter 48 können aber auch von einer Steuerung verarbeitet werden, mittels welcher eine automatisierte Veränderung der Drehzahl und/oder Drehrichtung 44 erfolgt. Zusätzlich könnte darüber hinaus noch vorgesehen sein, dass auf Basis dieser Parameter 48 und/oder in Abhängigkeit der Drehzahl und/oder Drehrichtung 44 auch der Winkel α und β und/oder die Arbeitstiefe des Rotors 34 geändert wird.

An die Rotoren 34 schließen in jeder Reiheneinheit 14 jeweils links und rechts neben der Pflanzenreihe 14 angeordnete Zustreicher 64 an, wobei diese jeweils eine von vorne oben nach hinten unten orientierte Kufe 66 besitzen, welche Kufen 66 zudem so angeordnet sind, dass der Abstand der in einer Reiheneinheit 14 angeordneten Zustreicher 64 sich von vorne nach hinten verringert. Mittels dieser Zustreicher 64 soll zumindest anteilsmäßig vorher von den Rotoren 34 aus den Pflanzenreihen 12 entfernter Ackerboden wieder in diese zurückgeführt werden, um somit eine ausreichende Bedeckung der Nutzpflanzen bzw. von deren Wurzeln mit Ackerboden zu gewährleisten.

Eine Arbeitsweise der landwirtschaftlichen Maschine 10 gemäß der Figuren 3a bis 3d könnte demnach wie folgt sein: zunächst wird der Ackerboden neben der Pflanzenreihe 12 mit Hilfe der Lockerungselemente 30 gelockert bzw. aufgebrochen, anschließend wird der gelockerte Boden und sich zwischen den Nutzpflanzen der Pflanzenreihe 12 befindendes Unkraut mit einem ersten Rotor 34, welcher mit einer ersten Drehzahl und/oder Drehrichtung 44 rotiert, aus der Pflanzenreihe 12 entfernt, wobei der Rotor 34 mittig zur Pflanzenreihe 12 angeordnet ist, aber auch zu dieser versetzt sein kann. Um dies zu verbessern, schließt an den ersten Rotor 34 ein zweiter Rotor an, welcher mit einer zweiten Drehzahl und/oder Drehrichtung 44 rotiert, wobei der Rotor 34 mittig zur Pflanzenreihe 12 angeordnet ist, aber auch zu dieser versetzt sein kann. Wiederum an die Rotoren 34 schließen Zustreicher 64 an, mittels welchen zumindest anteilsmäßig vorher von den Rotoren 34 aus den Pflanzenreihen 12 entfernter Ackerboden wieder an diese zurückgeführt wird, um eine ausreichende Bedeckung der Nutzpflanzen in den Pflanzenreihen bzw. von deren Wurzeln mit Ackerboden zu gewährleisten. Die erste und die zweite Drehzahl und/oder Drehrichtung 44 können jeweils unterschiedlich aber auch identisch sein. Zusätzlich könnte darüber hinaus noch vorgesehen sein das, dass auf Basis dieser Parameter 48 und/oder in Abhängigkeit der Drehzahl und/oder Drehrichtung 44 auch der Winkel α und β und/oder die Arbeitstiefe der Rotoren 34 geändert wird.

Der Antrieb 42 der Rotoren 34 kann als hydraulischer und/oder pneumatischer und/oder elektrischer Antrieb bzw. Motor ausgeführt sein, wobei die Drehzahl bspw. durch eine Veränderung der Energiezufuhr, d.h. durch eine Erhöhung oder Verminderung eines Drucks oder einer Erhöhung oder Verminderung der zugeführten Leistung verändert werden kann.

Wie im Ausführungsbeispiel der Figuren 3 ersichtlich ist, sind sowohl die Tiefenführungselemente 26, die Lockerungselemente 30 sowie die Zustreicher 64 voneinander getrennt sowie höhenverstellbar am Rahmen 18 montiert, sowie die Rotoren 34 jeweils nicht höhenverstellbar. Es wäre jedoch auch denkbar, dass zumindest die Lockerungselemente 30, die Rotoren 34 und die Zustreicher 64 an einem gemeinsamen Träger montiert sind, welcher wiederum höhenverstellbar am Rahmen 18 montiert sein kann, wobei zumindest die Lockerungselemente 30 und die Zustreicher 64 höhenverstellbar am Träger angebracht sein können. Auch könnten am Träger nur die Rotoren 34 höhenverstellbar angebracht sein. Um eine möglichst gute Lockerung des Ackerbodens zu erreichen sowie mit den Rotoren 34 die Pflanzen in der Pflanzenreihe nicht zu beschädigen, ist jeweils vorgesehen, dass die Lockerungselemente 30 eine größere Arbeitstiefe als die Rotoren 34 aufweisen und die Zustreicher 64 wiederum eine größere Arbeitstiefe als die Rotoren 34, jedoch eine geringere Arbeitstiefe als die Lockerungselemente 30 aufweisen. Die jeweilige Differenz ist größer oder gleich 20mm, insbesondere jedoch größer oder gleich 50mm. Es wäre auch denkbar, dass die in zwei Reihen angeordneten Lockerungselemente 30 zueinander höhenverstellbar sind, bzw. dass diese derartig zueinander angeordnet sind, dass diese verschiedene Arbeitstiefen erreichen. So könnte bspw. das vordere Lockerungselement 30 eine größere Arbeitstiefe als das hintere aufweisen, wobei auch hier wieder eine Differenz vorhanden sein kann, welche bspw. größer oder gleich 20 mm ist, vorzugsweise jedoch größer oder gleich 50 mm ist.

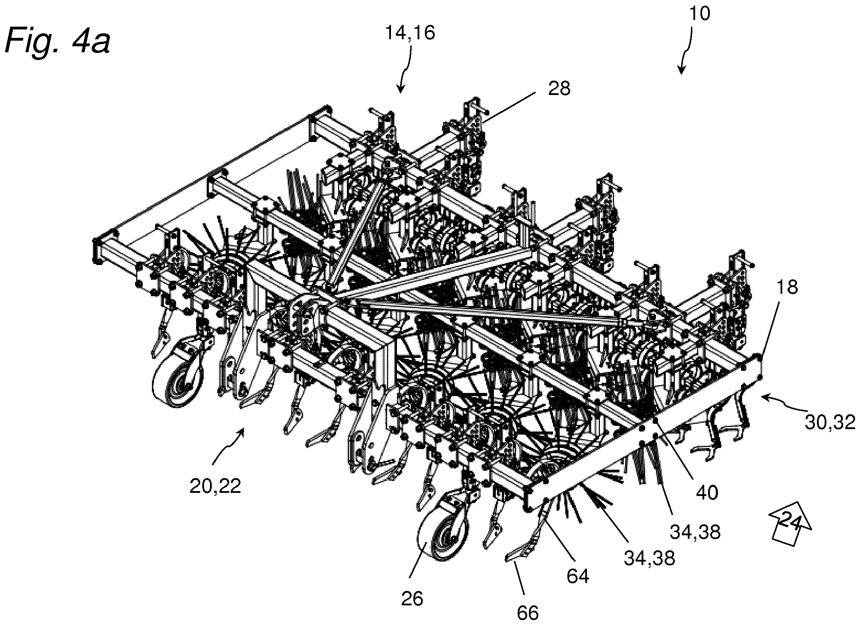

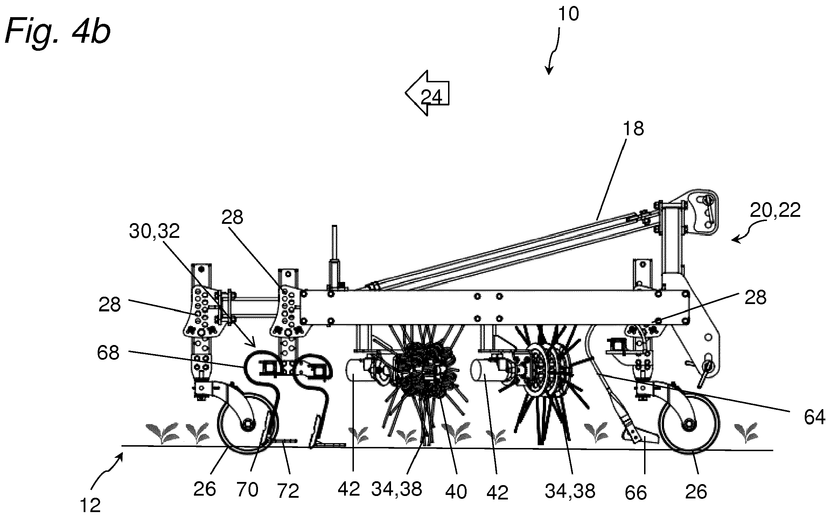

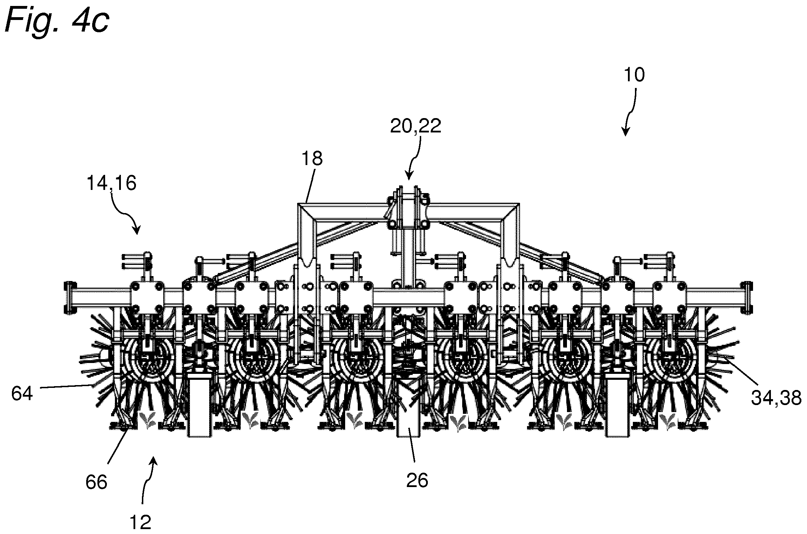

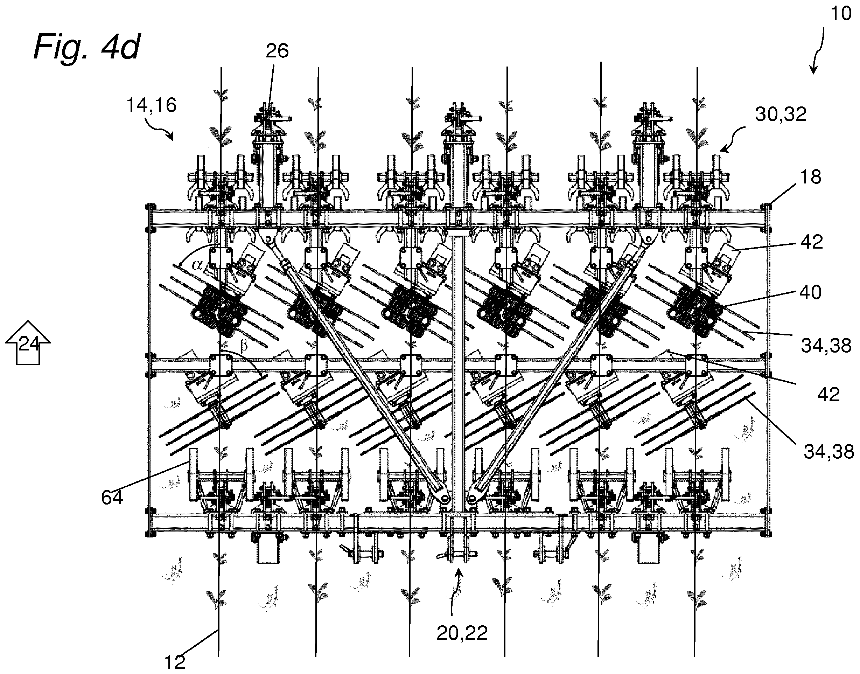

Aus den Figuren 4a - 4d geht noch eine weitere Ausgestaltungsmöglichkeit einer landwirtschaftlichen Maschine 10 zur Unkrautbekämpfung hervor; hierbei zeigt die Figur 4a eine Perspektivansicht, die Figur 4b eine Seitenansicht, die Figur 4c eine Ansicht von hinten sowie die Figur 4d eine Draufsicht der landwirtschaftlichen Maschine 10. Zur Unkrautbekämpfung sind der landwirtschaftlichen Maschine 10 sechs jeweils baugleiche Reiheneinheiten 14 zugeordnet.

Der Aufbau und die Funktionen der landwirtschaftlichen Maschine 10 bzw. von deren Reiheneinheiten 14 gemäß der Figuren 3 und 4 sind hierbei, ausgenommen von der Ausführungsform und der Anordnung der Rotoren 34, jeweils identisch, so dass die Figurenbeschreibungen der Figuren 3 auch für die Figuren 4 Verwendung finden.

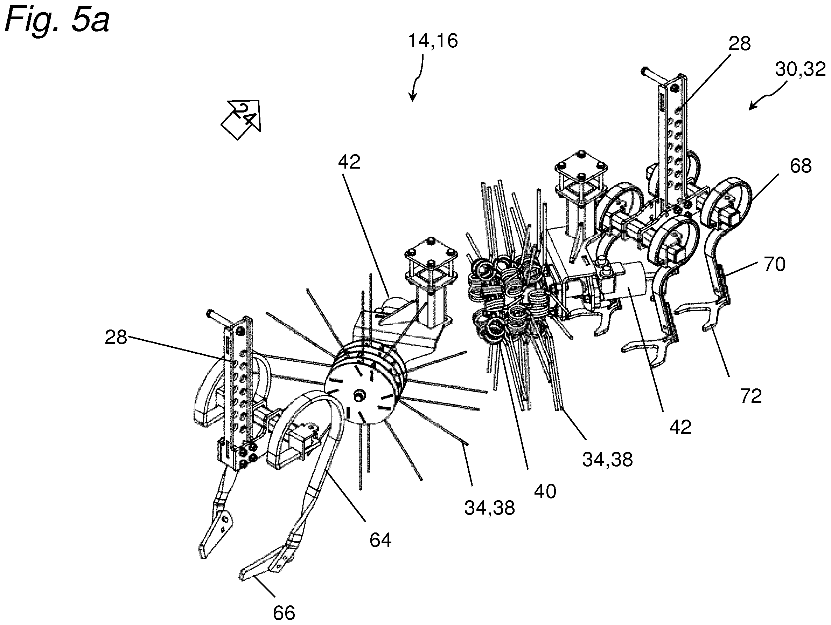

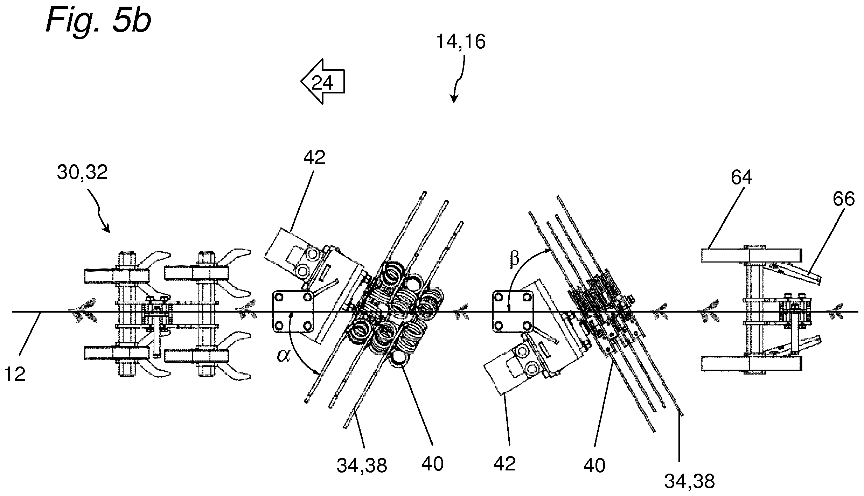

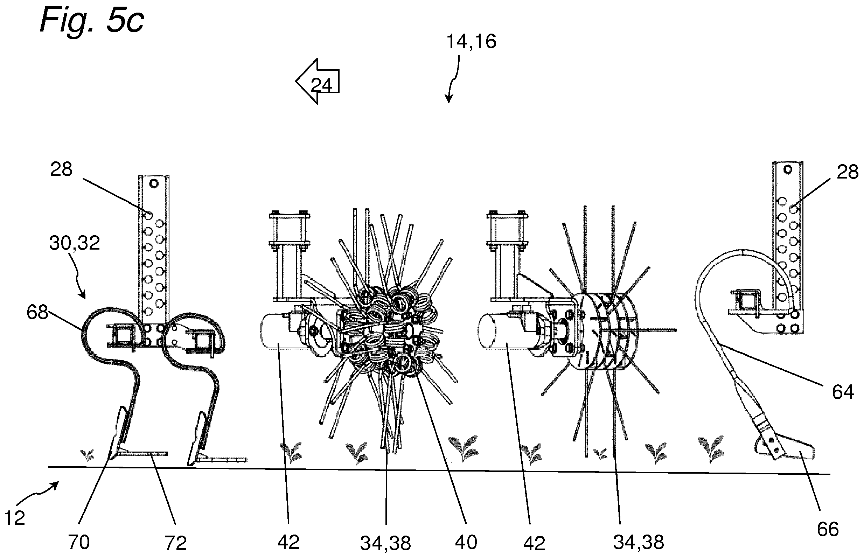

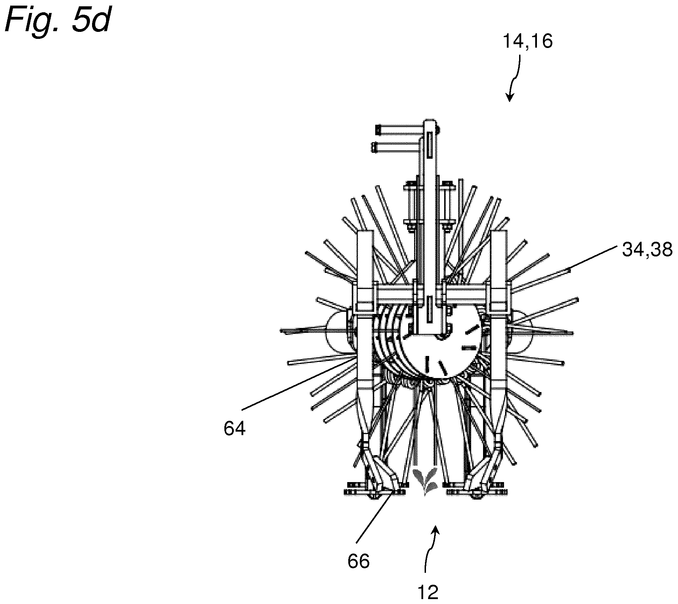

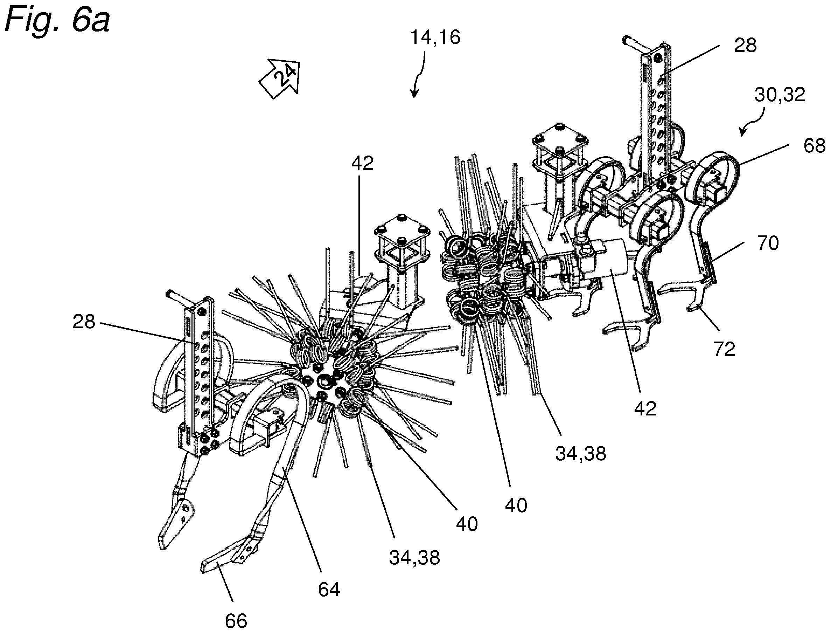

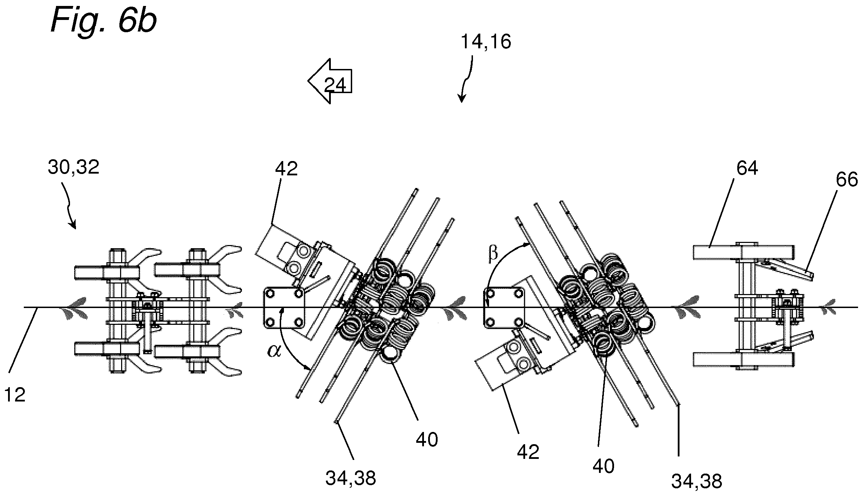

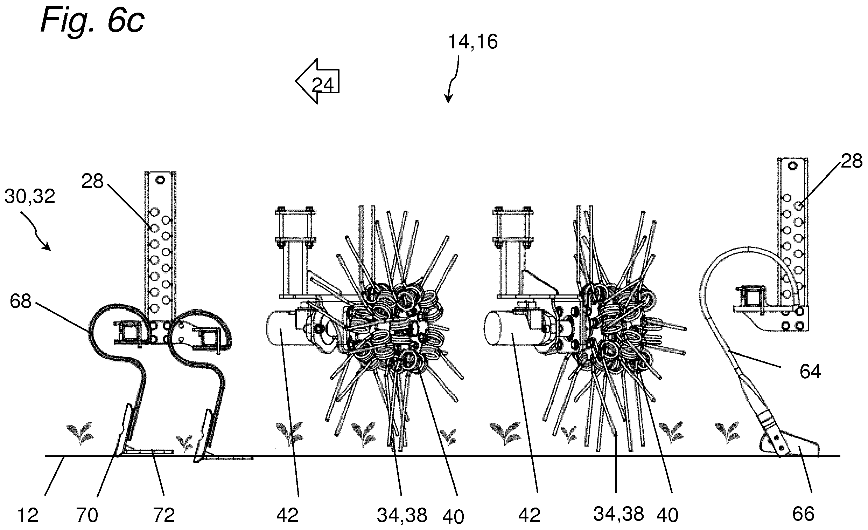

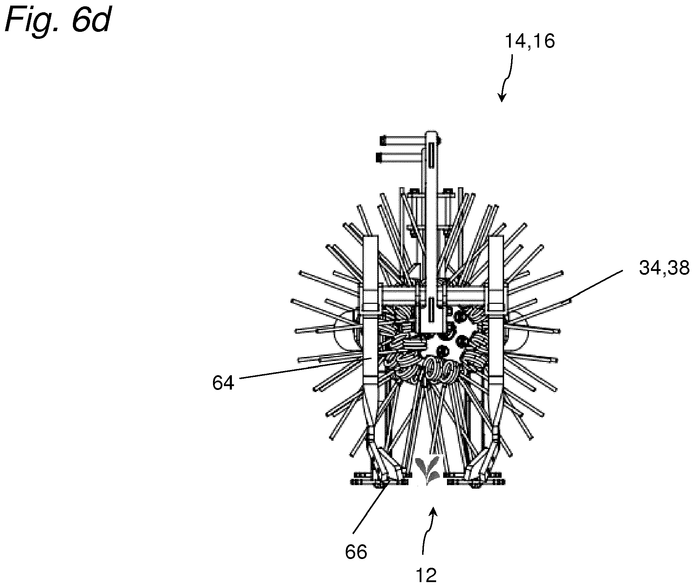

Die Werkzeuge 16 der Reiheneinheiten 14 der landwirtschaftlichen Maschinen 10 gemäß der Figuren 3a bis 3d und 4a bis 4d gehen darüber hinaus nochmals aus den Ansichten der Figuren 5a bis 5d und 6a bis 6d hervor. Die Figuren 6 zeigen die Werkzeuge 16 gemäß der Figuren 3. Die Figuren 5 zeigen die Werkzeuge 16 gemäß der Figuren 4 jeweils in einer Perspektivansicht (vergl. Fig. 5a und 6a), in einer Draufsicht (vergl. Fig. 5b und 6b) in einer Seitenansicht (vergl. Fig. 5c und 6c) sowie in einer Ansicht von hinten (vergl. Fig. 5d und 6d). Die Komponenten könnten bspw. an einem gemeinsamen, hier nicht dargestellten Träger montiert sein und eine Reiheneinheit 14 zur mechanischen Unkrautbekämpfung von in Pflanzenreihen 12 angeordneten Nutzpflanzen bilden.

Die Reiheneinheiten 14 weisen zunächst Lockerungselemente 30 auf, wobei diese zweireihig angeordnet sind, und wobei zwei hintereinander angeordnete Lockerungselemente 30 sich auf einer Ebene befinden. Die Lockerungselemente 30 könnten jedoch auch zueinander versetzt sein. Die jeweils innenliegenden Lockerungselemente 30 weisen zumindest einen Abstand zueinander auf, der derartig groß ist, dass diese zwar möglichst nahe an eine Pflanzenreihe 12 heranreichen, die Nutzpflanzen der Pflanzenreihe jedoch nicht beschädigt werden. Die Lockerungselemente 30 sind als Federzinken 32 ausgeführt, welche Federzinken 32 in deren oberen Bereich zunächst einen Abschnitt 68 aufweisen, mittels welchem die Federzinken 32 sowohl an einem Montagerahmen oder dergl. montiert werden können, sowie welcher Abschnitt 68 derartig elastisch verformbar ist, dass der Federzinken 32 bei Auftreffen auf ein Hindernis wie bspw. einem Stein, ausweichen kann, ohne das der Federzinken 32 hierbei beschädigt wird.

Im Unteren Bereich sind den Federzinken 32 Scharkörper 70 zugeordnet, welche jeweils in Fahrtrichtung von hinten oben nach vorne unten geneigt sind, wobei diese auch senkrecht zur Fahrrichtung angeordnet sein könnten, sowie einen konkaven oder konvexen Verlauf aufweisen könnten. Mittels des Scharkörpers 70 soll jeweils der Ackerboden gelockert und aufgebrochen werden. Rückwärtig sind am Scharkörper 70 links und rechts Schneiden 72 angeordnet, mittels welcher Schneiden 72 der Ackerboden in einer definierbaren Arbeitstiefe möglichst ganzflächig durchschnitten werden soll, ohne jedoch hierbei den Ackerboden zu vermischen bzw. Ackerboden nach oben zu fördern oder den Ackerboden zu durchmischen. Mit den Schneiden 72 soll somit erreicht werden, dass die Wurzeln der Unkräuter abgeschnitten werden. Die Schneiden sind jeweils von vorne nach hinten Y-förmig ausgebildet und weisen in Bezug auf den geneigten Scharkörper 70 einen Winkel auf, der größer oder gleich 45° ist, jedoch auch kleiner oder gleich 90° ist.

Um den Verschleiß des Scharkörpers 70 bzw. der Schneiden 72 möglichst gering zu halten, sind diese bspw. aus einem verschleißfesten Material gefertigt. Auch können bspw. die einem Verschleiß unterliegenden Flächen des Scharkörpers 70 bzw. der Schneiden 72 mit Hartmetallelementen bestückt sein. Der geneigte Scharkörper 70 weist insbesondere eine Breite auf, die größer oder gleich 20 mm ist; die Y-förmigen Schneiden 72 sind in deren vorderen Bereich genauso breit wie der Scharkörper 70, jedoch erweitert sich dessen Breite symmetrisch auf eine Breite, die größer oder gleich 50 mm ist. Um Beschädigungen oder dergl. durch den Y-förmigen Verlauf an den Schneiden 72 durch somit möglicherweise entstehende Spitzen zu vermeiden, können die Enden der Schneiden 72 mit Schrägen, Rundungen oder Abflachungen versehen sein. Die Schneiden 72 besitzen zudem eine Dicke von wenigstens 3 mm, an dessen vorderen Abschnitt wiederum eine spitzig verlaufende Kontur als eigentliche Schneidkante anschließt.

An die Lockerungselemente 30 folgen zwei, in einem Winkel α und Winkel β bzw. schräg zur Pflanzenreihe 12 bzw. zur Fahrtrichtung 24 angeordnete, baugleiche (Vergl. Fig. 6a - 6d) bzw. unterschiedliche (vergl. Fig. 5a - 5d) Rotoren 34, wobei deren Ausrichtungen wiederum jeweils entgegengesetzt zueinander sind. Den Rotoren 34 sind jeweils an deren Umfang 36 mehrreihig eine Vielzahl von Zinken 38 zugeordnet, wobei die Zinken 38 jeweils durch Striegelelemente 40 bzw. durch Stahlelemente 62 gebildet werden. Die Zinken sind insbesondere so ausgeführt, dass diese elastisch verformbar sind, um somit Beschädigungen vorzubeugen. Die Winkel α und β der Rotoren können wiederum manuell oder automatisch veränderbar und ebenso von verschiedensten Parametern 48 abhängig sein, wobei die Winkel α und β jeweils kleiner oder gleich 90° sind, insbesondere jedoch kleiner oder gleich 75° sind, bzw. wobei die Rotoren 34 auch waagerecht zur Pflanzenreihe angeordnet sein können. Auch können die Rotoren 34 einer Reiheneinheit 14 unterschiedliche Winkel α und β sowie Ausrichtungen zueinander aufweisen.

Die Rotoren 34 werden jeweils mittels eines motorischen Antriebs 42 angetrieben, wobei deren Drehzahl und/oder Drehrichtung 44 variabel veränderbar bzw. einstellbar ist. Auch wäre es denkbar, dass nur ein Rotor 34 motorisch angetrieben wird und der nicht motorisch angetriebene mittels Bodenantrieb in Rotation gebracht wird. Insbesondere wäre es denkbar, dass der mittels Bodenantrieb angetriebene Rotor 34 in Fahrrichtung 24 rotiert und der motorisch angetriebene entgegengesetzt zur Fahrrichtung 24. Die Drehzahl und/oder Drehrichtung 44 kann sowohl manuell durch eine Bedienperson als auch automatisiert verändert werden, wobei dies wiederum auf Basis verschiedenster Parameter 48 erfolgen kann. So kann ein Parameter 48 die Fahrgeschwindigkeit 46 der landwirtschaftlichen Maschine 10 sein, ein weiterer Parameter 48 kann die Bestandsdichte an Nutzpflanzen in der Pflanzenreihe 12 sein. Auch kann der jeweilige Reihenabstand als Parameter 48 verwendet werden, so dass bspw. die Drehzahl 44 bei einem Reihenabstand von 45cm kleiner als bei einem Reihenabstand von 75cm ist. Des Weiteren könnte auch der Durchmesser des jeweiligen Rotors 34 als Parameter 48 verwendet werden, so dass die Drehzahl 44 bspw. umso kleiner ist, je größer der Durchmesser ist und umgekehrt, oder dass die Drehzahl umso größer ist je größer der Durchmesser ist und umgekehrt. Die Parameter 48 können jeweils von einer Bedienperson verwendet werden, um die Drehzahl und/oder Drehrichtung 44 manuell zu ändern; die Parameter 48 können aber auch von einer Steuerung verarbeitet werden mittels welcher Steuerung eine automatisierte Veränderung der Drehzahl und/oder Drehrichtung 44 erfolgt.

An die Rotoren 34 schließen in jeder Reiheneinheit 14 links und rechts neben der Pflanzenreihe 14 angeordnete Zustreicher 64 an, wobei diese jeweils eine von vorne oben nach hinten unten orientierte Kufe 66 besitzen, welche Kufen 66 zudem so angeordnet sind, dass sich der Abstand dieser in einer Reiheneinheit 14 von vorne nach hinten verringert. Mittels dieser Zustreicher 64 soll zumindest anteilsmäßig vorher von den Rotoren 34 aus den Pflanzenreihen 12 entfernter Ackerboden wieder an diese zurückgeführt werden, um eine ausreichende Bedeckung der Nutzpflanzen bzw. von deren Wurzeln zu gewährleisten.

Der Antrieb 42 der Rotoren 34 kann als hydraulischer und/oder pneumatischer und/oder elektrischer Antrieb bzw. Motor ausgeführt sein, wobei die Drehzahl bspw. durch eine Veränderung der Energiezufuhr, d.h. durch eine Erhöhung oder Verminderung eines Drucks oder einer Erhöhung oder Verminderung der zugeführten Leistung verändert werden kann.

Wie im Ausführungsbeispiel der Figuren 5 und 6 ersichtlich ist, sind sowohl die Lockerungselemente 30 sowie die Zustreicher 64 voneinander getrennt und mittels Lochkulissen 28 höhenverstellbar sowie die Rotoren 34 nicht höhenverstellbar. Es wäre jedoch auch denkbar, dass zumindest die Lockerungselemente 30, die Rotoren 34 und die Zustreicher 64 an einem gemeinsamen Träger montiert sind, welcher wiederum höhenverstellbar an einem Rahmen 18 einer landwirtschaftlichen Maschine 10 montiert sein kann, wobei wiederum zumindest die Lockerungselemente 30 und die Zustreicher 64 höhenverstellbar am Träger angebracht sein können. Auch könnten am Träger nur die Rotoren 34 höhenverstellbar angebracht sein. Um eine möglichst gute Lockerung des Ackerbodens zu erreichen sowie mit den Rotoren 34 die Pflanzen in der Pflanzenreihe 12 nicht zu beschädigen, ist jeweils vorgesehen, dass die Lockerungselemente 30 eine größere Arbeitstiefe als die Rotoren 34 und die Zustreicher 64 wiederum eine größer Arbeitstiefe als die Rotoren 34, jedoch eine geringere Arbeitstiefe als die Lockerungselemente 30 aufweisen. Die jeweilige Differenz ist größer oder gleich 20 mm, insbesondere jedoch größer oder gleich 50 mm. Es wäre auch denkbar, dass die in zwei Reihen angeordneten Lockerungselemente 30 zueinander höhenverstellbar sind, bzw. diese derartig zueinander angeordnet sind, dass diese verschiedene Arbeitstiefen erreichen. So könnte bspw. das vordere Lockerungselement 30 eine größere Arbeitstiefe als das hintere aufweisen, wobei auch hier wieder eine Differenz vorhanden sein kann, welche bspw. größer oder gleich 20 mm ist, vorzugsweise jedoch größer oder gleich 50 mm ist.

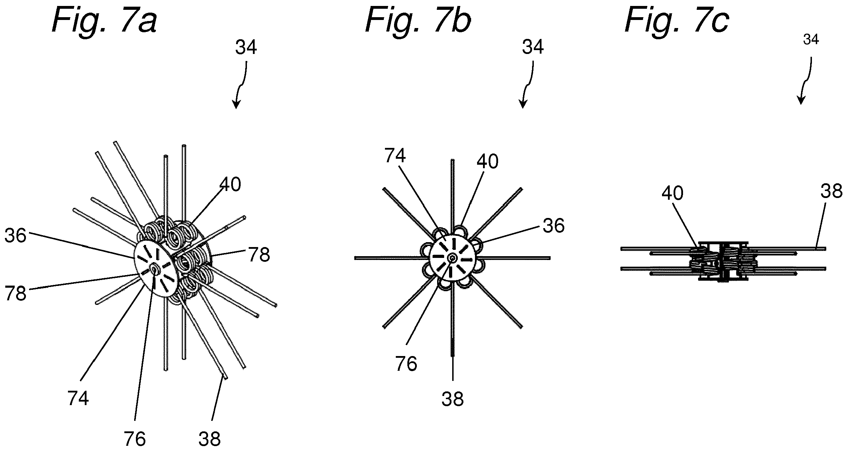

In den Figuren 7a bis 7c, 8a bis 8c, 9a bis 9c, 10a bis 10c sowie 11a bis 11c sind jeweils Ausführungsvarianten von Rotoren 34 dargestellt, wobei die Figuren 7a, 8a, 9a, 10a und 11a eine Perspektivansicht dieser zeigen, die Figuren 7b, 8b, 9b, 10b und 11b Vorderansichten dieser zeigen sowie die Figuren 7c, 8c, 9c, 10c und 11c Draufsichten dieser zeigen.

Die Figuren 7 zeigen einen Rotor 34, welcher einen Grundkörper 74 aufweist, der Grundkörper 74 besitzt wiederum eine Lagerhülse 76, mittels derer der Rotor 34 rotierend an einer Reiheneinheit oder einer landwirtschaftlichen Maschine montiert werden, mittels welcher aber auch ein motorischer Antrieb aufgenommen werden kann. An die Lagerhülse 76 schließt der Grundkörper 74 an, welcher sich aus einem vorderen und einem hinteren Abdeckblech 78 zusammensetzt. Zwischen den Abdeckblechen 78 erstrecken sich jeweils Montageelemente 80, bspw. in Form von Montageblechen oder von Rohren oder Profilen oder dergl. In den Montageelementen 80 können Bohrungen vorhanden sein, mittels welcher Bohrungen die am Umfang des Grundkörpers 74 angeordneten Zinken 38 montiert werden können. Um zum einen kostengünstige sowie zum andern um Zinken 38 zu erhalten, welche elastisch verformbar sind, um somit Beschädigungen oder dergl. zu vermeiden, sind diese als Striegelelemente 40 gebildet, wobei die Striegelelemente 40 wiederum jeweils zwei Zinken 38 aufweisen und die Striegelelemente 40 sich in Längsrichtung zwischen den Abdeckblechen 78 erstrecken. Zudem sind die Montageelemente 80 und entsprechend die Striegelelemente 40 um 45° zueinander verdreht am Grundkörper 74 montiert, wobei wiederum diese Verdrehung auch geringer oder größer sein kann. Zusätzlich zur Verdrehung sind die Striegelelemente 40 in deren Erstreckung zwischen den Abdeckblechen 78 zueinander versetzt angeordnet, wodurch sich eine vierreihige Anordnung bildet. Durch diese mehrreihige Anordnung der Zinken 38 ergibt sich eine wesentlich bessere Arbeitsqualität der Rotoren 34 gegenüber den aus dem Stand der Technik bekannten einreihigen Anordnungen.

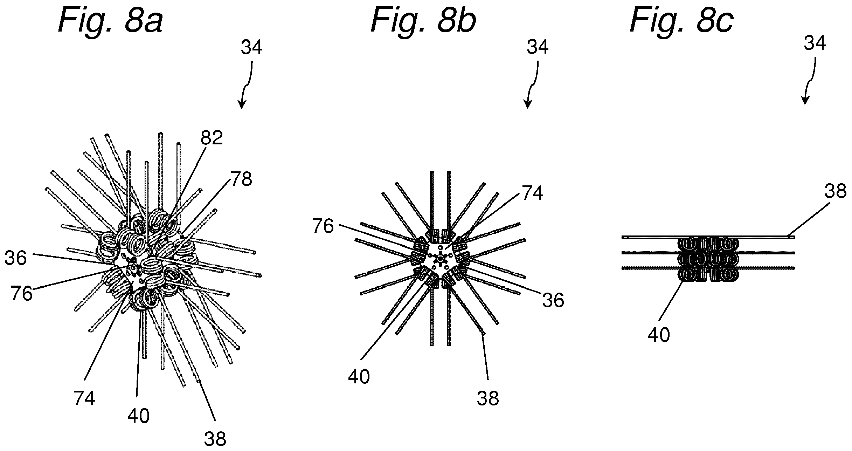

Die Figuren 8 zeigen einen Rotor 34, welcher einen Grundkörper 74 aufweist. Der Grundkörper 74 besitzt wiederum eine Lagerhülse 76, mittels derer der Rotor 34 rotierend an einer Reiheneinheit oder einer landwirtschaftlichen Maschine montiert werden kann, mittels welcher aber auch ein motorischer Antrieb aufgenommen werden kann. An die Lagerhülse 76 schließt ein Grundkörper 74 an, welcher sich aus einem vorderen und einem hinteren Abdeckblech 78 sowie einem Zwischenblech 82 zusammensetzt, zwischen welchen wiederum Abstandshülsen oder Abstandsbleche oder Rohre oder Profile angeordnet sind. An den Abdeckblechen 78 und am Zwischenblech 82 sind jeweils Bohrungen oder dergl. vorhanden, welche als Montageelemente 80 dienen, wobei mit diesen Montageelementen 80 jeweils am Umfang des Grundkörpers 74 eine Vielzahl von Federn 38 montiert werden können. Um zum einen kostengünstige Zinken 38 zu erhalten sowie zum andern um Zinken 38 zu erhalten, welche elastisch verformbar sind, um somit Beschädigungen oder dergl. zu vermeiden, sind die diese aus Striegelelementen 40 gebildet, wobei die Striegelelemente 40 zwei Zinken 38 aufweisen und jeweils radial zueinander versetzt am Umfang der Abdeckbleche 78 sowie des Zwischenblechs 82 angeordnet sind. Die Striegelelemente 40 bilden somit eine dreireihige Anordnung der Zinken 38, wodurch die Arbeitsqualität der Rotoren 34 erhöht wird. Zudem sind die Striegelelemente 40 zwischen der ersten Reihe und der zweiten Reihe verdreht zueinander angeordnet, da in jeder Reihe jeweils fünf Striegelelemente 40 angebracht sind. Um regelmäßige Abstände zu erhalten, sind die Striegelelemente 40 jeweils um 36° zueinander verdreht, wobei hier auch andere Winkel denkbar wären, und wobei auch die Striegelelemente 40 aller drei Reihen zueinander verdreht sein könnten.

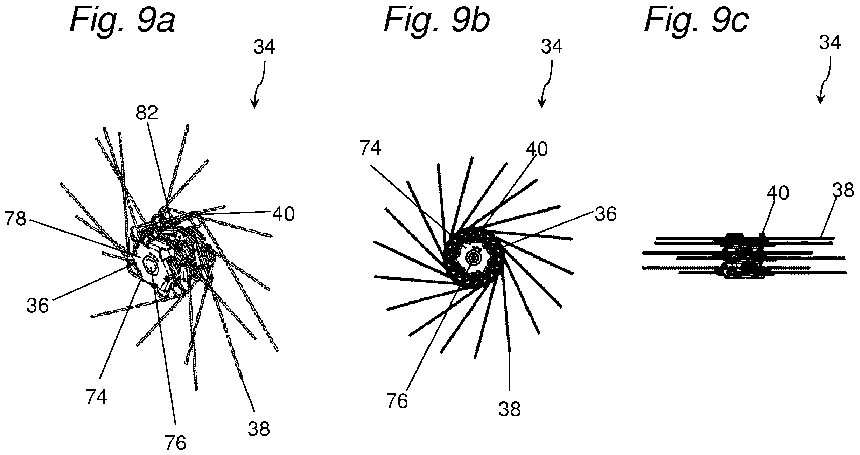

Die Figuren 9 zeigen einen Rotor 34, welcher einen Grundkörper 74 aufweist. Der Grundkörper 74 besitzt wiederum eine Lagerhülse 76, mittels derer der Rotor 34 rotierend an einer Reiheneinheit oder einer landwirtschaftlichen Maschine montiert werden kann, mittels welcher aber auch ein motorischer Antrieb aufgenommen werden kann. An die Lagerhülse 76 schließt ein Grundkörper 74 an, welcher sich aus einem vorderen und einem hinteren Abdeckblech 78 sowie einem Zwischenblech 82 zusammensetzt, zwischen welchen wiederum Abstandshülsen oder Abstandsbleche oder Rohre oder Profile angeordnet sind. An den Abdeckblechen 78 und am Zwischenblech 82 sind jeweils Bohrungen oder dergl. vorhanden, welche als Montageelemente 80 dienen, wobei mit diesen Montageelementen 80 jeweils am Umfang des Grundkörpers 74 eine Vielzahl von Federn 38 montiert werden kann. Um zum einen kostengünstige Zinken 38 zu erhalten sowie zum andern um Zinken 38 zu erhalten, welche elastisch verformbar sind, um somit Beschädigungen oder dergl. zu vermeiden, sind diese aus Striegelelementen 40 gebildet, wobei die Striegelelemente 40 zwei Zinken 38 aufweisen und jeweils radial zueinander versetzt am Umfang der Abdeckbleche 78 sowie des Zwischenblechs 82 angeordnet sind.

Zusätzlich zur Verdrehung sind jeweils zwei zueinander axial versetzte Striegelelemente an jedem Abdeckblech 78 und am Zwischenblech 82 angeordnet, wobei hierfür sowohl die Abdeckbleche 78 als auch die Zwischenbleche 82 jeweils Kantungen aufweisen, an welchen wiederum jeweils zwei Montagelemente 80 angebracht sind. Die Striegelelemente 40 könnten jedoch hierfür auch bspw. an einer Vorder- und einer Rückseite der Abdeckbleche 78 und der Zwischenbleche 82 angebracht sein. Die Striegelelemente 40 bilden somit eine sechsreihige Anordnung der Striegel 38, wodurch die Arbeitsqualität der Rotoren 34 erhöht werden kann. Zudem sind die Striegelelemente 40 zwischen den Reihen von Zinken 38 jeweils verdreht zueinander angeordnet, da in jeder Reihe jeweils drei Striegelelemente 40 angebracht sind und um regelmäßige Abstände zu erhalten. Durch eine derartige Anordnung kann wiederum die Drehzahl 44 entsprechend angepasst werden, bzw. kann auch diese Anordnung als Parameter dienen.

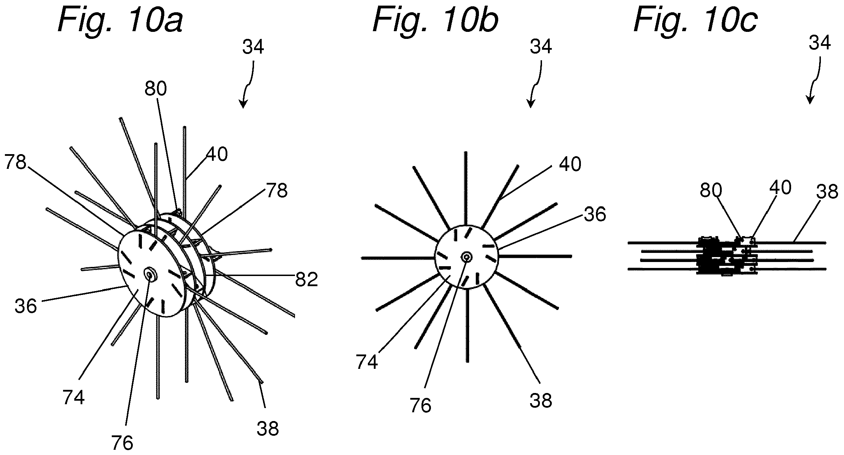

Die Figuren 10 zeigen einen Rotor 34, welcher einen Grundkörper 74 aufweist. Der Grundkörper 74 besitzt wiederum eine Lagerhülse 76, mittels derer der Rotor 34 rotierend an einer Reiheneinheit oder einer landwirtschaftlichen Maschine montiert werden kann, mittels welcher aber auch ein motorischer Antrieb aufgenommen werden kann. An die Lagerhülse 76 schließt ein Grundkörper an, welcher sich aus einem vorderen und einem hinteren Abdeckblech 78 sowie zwei zwischen diesen angeordneten Zwischenblechen 82 zusammensetzt. Zwischen den Abdeckblechen 78 und den Zwischenblechen 82 sowie an das hintere Abdeckblech 78 anschließend sind jeweils Montageelemente 80 in Form von Montageblechen angeordnet, an welchen wiederum jeweils Bohrungen vorhanden sind, um somit am Umfang des Grundkörpers 74 Zinken 38 anbauen zu können. Um zum einen kostengünstige sowie zum andern um Zinken 38 zu erhalten, welche elastisch verformbar sind, um somit Beschädigungen oder dergl. zu vermeiden, sind die Zinken 38 aus Striegelelementen 40 gebildet, wobei die Striegelelemente 40 jeweils einen Zinken 38 aufweisen und jeweils radial zueinander versetzt an den Montageelementen 80 angebracht sind. Die Striegelelemente 40 bilden somit eine vierreihige Anordnung der Zinken 38, wodurch die Arbeitsqualität der Rotoren 34 erhöht wird. Zudem sind die Striegelelemente 40 zwischen den Reihen von Zinken 38 jeweils verdreht zueinander angeordnet, da in jeder Reihe jeweils drei Striegelelemente 40 angebracht sind und um regelmäßige Abstände zu erhalten. Durch eine derartige Anordnung kann wiederum die Drehzahl 44 entsprechend angepasst werden, bzw. kann auch diese Anordnung als Parameter dienen.

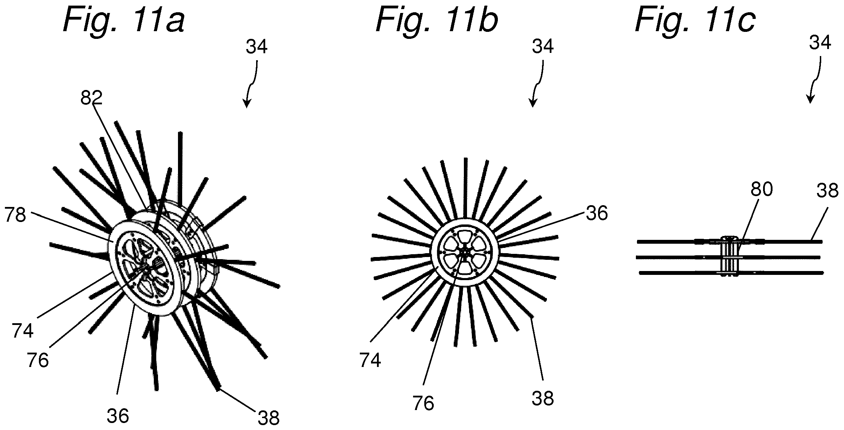

Die Figuren 11 zeigen einen Rotor 34, welcher einen Grundkörper 74 aufweist. Der Grundkörper 74 besitzt wiederum eine Lagerhülse 76, mittels derer der Rotor 34 rotierend an einer Reiheneinheit oder einer landwirtschaftlichen Maschine montiert werden kann, mittels welcher aber auch ein motorischer Antrieb aufgenommen werden kann. An die Lagerhülse 76 schließt ein Grundkörper 74 an, welcher sich aus einem vorderen und einem hinteren Abdeckblech 78 sowie einem Zwischenblech 82 zusammensetzt, zwischen welchen wiederum Abstandshülsen oder Abstandsbleche angeordnet sind. An den Abdeckblechen 78 und am Zwischenblech 82 sind jeweils Bohrungen oder dergl. vorhanden, welche wiederum als Montageelemente 80 dienen, wobei mit diesen Montageelementen 80 am Umfang des Grundkörpers 74 eine Vielzahl von Zinken 38 montiert werden können. Um zum einen kostengünstige sowie zum andern um Zinken 38 zu erhalten, welche elastisch verformbar sind, um somit Beschädigungen oder dergl. zu vermeiden, sind die Zinken 38 aus Stahlelementen 62 in Form von Rundstählen gebildet, wobei die Stahlelemente 62 jeweils einen Zinken 38 aufweisen und jeweils radial zueinander versetzt am Umfang der Abdeckbleche 78 sowie des Zwischenblechs 82 angeordnet sind. Die Stahlelemente 62 bilden somit eine dreireihige Anordnung der Zinken 38, wodurch die Arbeitsqualität der Rotoren 34 erhöht wird. Zudem sind die Stahlelemente 62 zwischen den Reihen von Zinken 38 jeweils verdreht zueinander angeordnet, da in jeder Reihe jeweils neun Stahlelemente 62 angebracht sind und um regelmäßige Abstände zu erhalten. Durch eine derartige Anordnung kann wiederum die Drehzahl 44 entsprechend angepasst werden, bzw. kann auch diese Anordnung als Parameter dienen.

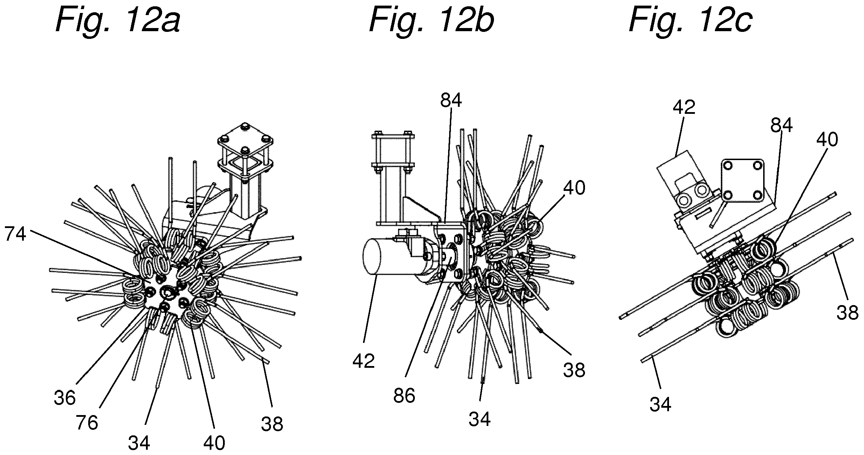

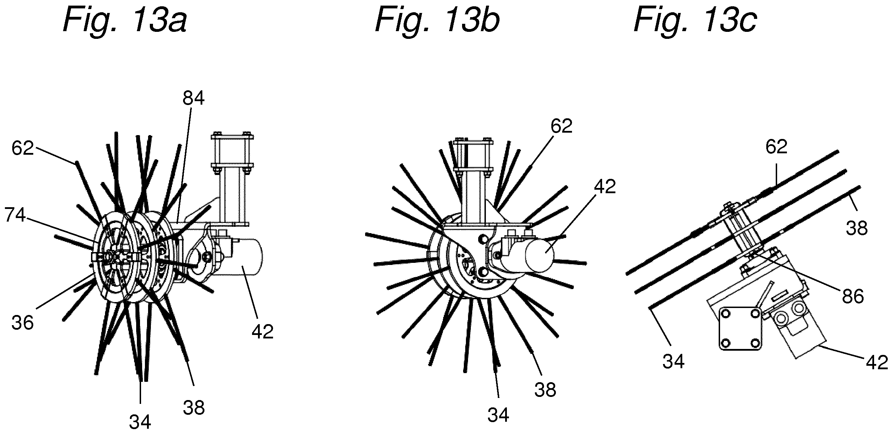

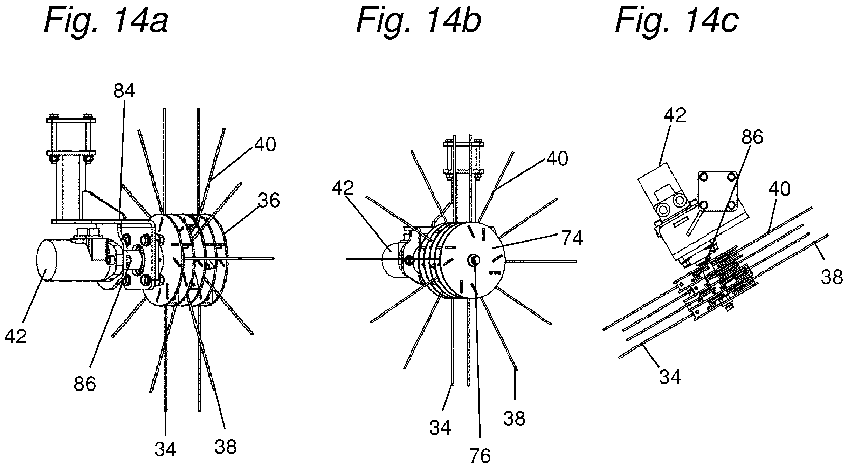

Ausführungsvarianten von verschiedenen Rotoren 34 mit motorischem Antrieb 42 zeigen die Figuren 12a bis 12c, 13a bis 13c, 14a bis 14c, wobei die Figuren 12a und 12b sowie 13a und 13b und 14a und 14b eine Perspektivansicht dieser zeigen sowie die Figuren 12c, 13c und 14c eine Draufsicht dieser zeigen. Der Rotor 34 gemäß der Figuren 12 entspricht dem Rotor 34 gemäß der Figuren 8. Der Rotor 34 gemäß der Figuren 13 entspricht dem Rotor 34 gemäß der Figuren 11. Der Rotor 34 gemäß der Figuren 14 entspricht dem Rotor 34 gemäß der Figuren 10, wobei die jeweiligen Figurenbeschreibungen der Rotoren 34 hierfür auch Verwendung finden. Zusätzlich sind bei den Figuren 12 bis 14 die Rotoren 34 mit einem motorischen Antrieb 42 verbunden, mittels welchem die Drehzahl und/oder Drehrichtung 44 der Rotoren 34 variabel veränderbar sind. Der Antrieb 42 ist jeweils an einem Flansch 84 montiert sowie über eine Antriebswelle 86 mit dem Rotor 34 verbunden. Es könnte jedoch auch vorgesehen sein, den Rotor 34 direkt an einem Lagerstummel des Antriebs 42 zu montieren. Beim Antrieb 42 kann es sich sowohl um einen hydraulischen und/oder einen pneumatischen und/oder einen elektrischen Antrieb handeln, wobei die Drehzahl bspw. durch eine Veränderung der Energiezufuhr, d.h. durch eine Erhöhung oder Verminderung eines Drucks oder einer Erhöhung oder Verminderung der zugeführten Leistung verändert werden kann.

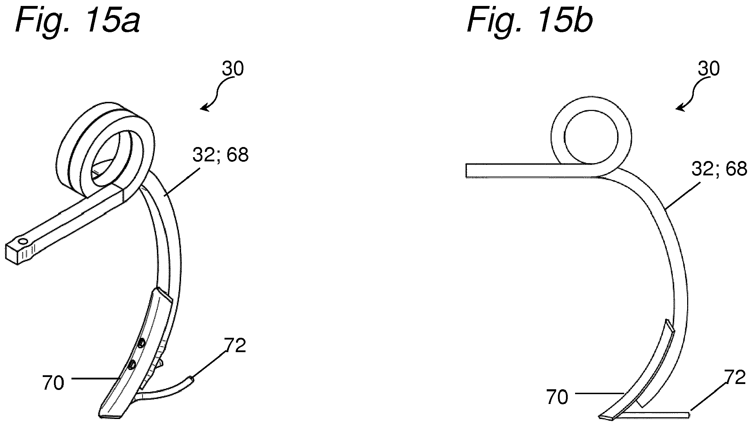

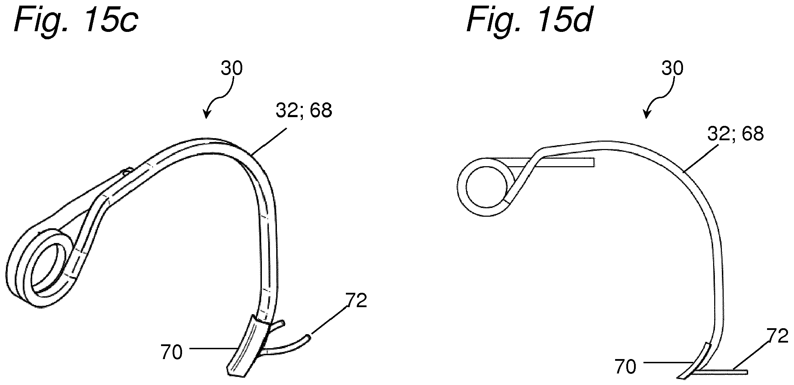

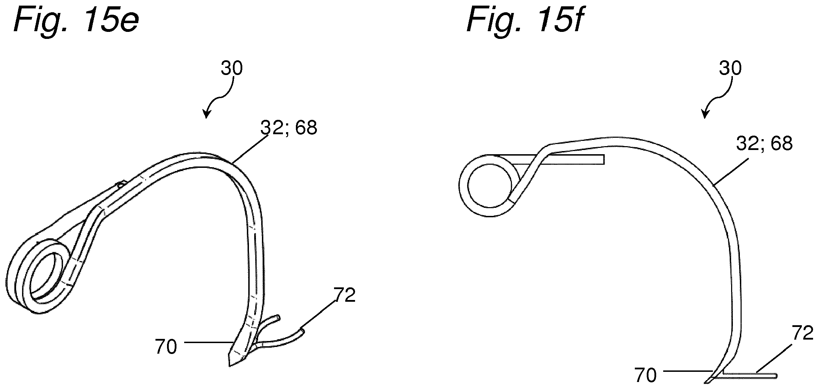

Verschiedene Ausführungsformen von Lockerungselementen 30 gehen aus den Figuren 15a bis 15f hervor, wobei die Figuren 15a und 15c und 15e dieses jeweils in einer Perspektivansicht sowie die Figuren 15b und 15d und 15f dieses jeweils in einer Seitenansicht zeigen. Die Figuren 15a bis 15d weisen jeweils einen Scharkörper 70 auf. Bei den Figuren 15e und 15f ist jeweils ein elastischer Abschnitt 68 eines als Federzinken 32 so ausgebildet, dass dieser Abschnitt 68 im unteren Bereich zugleich den Scharkörper 70 bildet. Die Lockerungselemente 30 sind jeweils als Federzinken 32 ausgebildet d.h. es werden keine zusätzlichen Federelemente oder Lagerelemente benötigt, um ein Ausweichen der Lockerungselemente 30 beim Auftreffen auf Hindernisse wie bspw. Steinen oder dergl. zu ermöglichen; hierfür besitzen die Federzinken 32 jeweils einen elastischen Abschnitt 68.

Der Scharkörper 70 bzw. der als Scharkörper 70 ausgebildete Bereich des Lockerungselementes 30 ist in Fahrtrichtung von hinten oben nach vorne unten geneigt und zumindest abschnittweise, wobei der Scharkörper 70 jeweils so geformt ist, dass mittels diesen der Ackerboden gelockert und aufgebrochen wird. Auch könnten sog. Gänsefußschare verwendet werden. Am Rückwärtigen Ende des Scharkörpers 70 schließen links und/oder rechts Schneiden 72 an, mittels welcher Schneiden 72 der Ackerboden in einer definierbaren Arbeitstiefe möglichst großflächig ggf. auch ganzflächig durchschnitten wird, ohne jedoch hierbei den Ackerboden zu vermischen bzw. ohne hierbei Ackerboden gezielt nach oben zu befördern. Mit den Schneiden 72 wir somit erreicht, dass die Wurzeln der Unkräuter abgeschnitten werden, der Ackerboden hierbei aber nur minimal durchlüftet wird, um ein Nachwachsen des Unkrauts zu verhindern.

Die Schneiden 72 im Ausführungsbeispiel der Figuren 15 sind von vorne nach hinten Y-förmig ausgebildet und weisen in Bezug auf den geneigten Scharkörper einen Winkel auf, der größer oder gleich 45° ist jedoch auch kleiner oder gleich 90° ist.

Insbesondere sind die Schneiden 72 am Scharkörper 70 bzw. am Abschnitt 68 derartig angebracht, dass diese waagerecht orientiert sind bzw. das diese parallel zur Bodenoberfläche verlaufen, wobei durch Veränderung des Winkels der Schneiden 72 das jeweilige Durchmischen des Ackerbodens verändert werden kann. Um den Verschleiß des Scharkörpers bzw. der Schneiden 72 möglichst gering zu halten, sind diese bspw. aus einem verschleißfesten Material wie bspw. Hardox oder Borstahl oder dergl. gefertigt. Auch könnten die einem Verschleiß unterliegenden Flächen des Scharkörpers 70 bzw. der Schneiden 72 mit Hartmetallelementen bestückt sein. Des Weiteren sind die Schneiden 72 aus einem Rundmaterial gefertigt. Der geneigte Scharkörper 70 weist insbesondere eine Breite auf, die größer oder gleich 20 mm ist. Die Y-förmigen Schneiden 72 sind in deren vorderen Bereich genauso breit wie der Scharkörper 70, jedoch erweitert sich dessen Breite symmetrisch auf eine Breite die größer oder gleich 50 mm ist, insbesondere jedoch 100 mm beträgt, wobei hierbei die Y-förmige Ausgestaltungsvariante zunächst einen Abschnitt besitzt, der die gleiche Breite wie der Scharkörper 70 aufweist. Diese Breite kann wiederum vom Reihenabstand der Pflanzenreihen sowie von der Anzahl an Lockerungselementen abhängen. Die Erweiterung der Schneiden 72 in Bezug auf die Scharkörper 70 weist mindestens ein Verhältnis von 1 : 2, insbesondere jedoch von größer gleich 1 : 3 oder größer gleich 1 : 5 auf.

Durch dieses Verhältnis wird wiederum definiert, wie intensiv der Ackerboden gelockert und durchmischt wird und wie intensiv die Unkrautwurzeln abgeschnitten werden. Darüber hinaus weisen die Schneiden 72 eine Länge von wenigstens 50 mm bzw. von wenigstens 100 mm auf, wobei hierbei wiederum vorgesehen sein kann, dass die Breite und die Länge identisch sind oder die Schneiden 72 um wenigstens ein Viertel länger sind als breit.

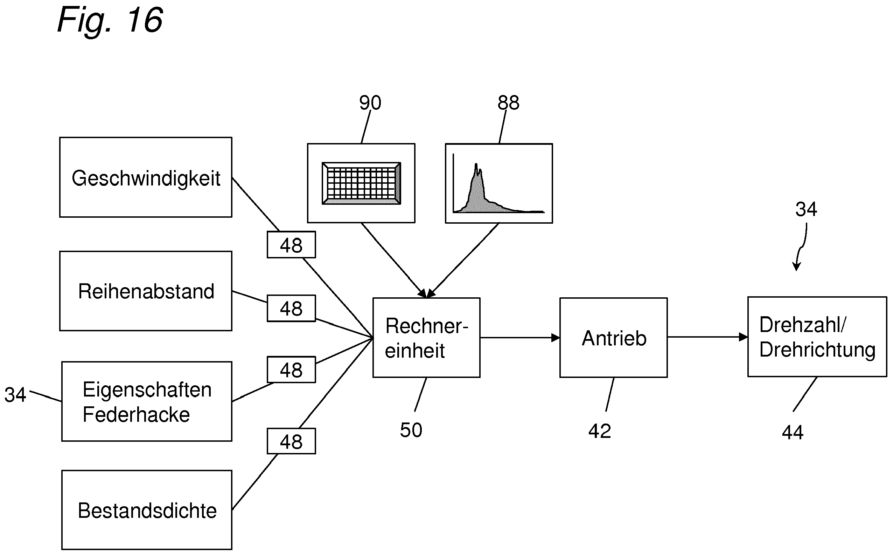

Ein Blockschaltbild eines möglichen Steuerprogramms bzw. einer möglichen Steuerung des wenigstens einen Rotors 34 bzw. deren Drehzahl und/oder Drehrichtung 44 geht aus der Figur 16 hervor. Wie das Blockschaltbild erkennen lässt, wird die Drehzahl und/oder Drehrichtung 44 mittels eines motorischen Antriebs 42 verändert, wobei die Ansteuerung des Antriebs 42 mittels einer Rechnereinheit 50 bzw. mittels eines in einer Rechnereinheit 50 hinterlegten Regelprogramms erfolgt. Neben der Rechnereinheit 50 könnte hier jedoch auch eine Steuerung bspw. eine hydraulische- oder pneumatische- oder elektrische- Steuerung oder eine Kombination aus diesen Systemen zur Ansteuerung des Antriebs 42 vorgesehen sein.

In der Rechnereinheit 50 bzw. mittels der Steuerung werden verschiedenste Parameter 48 verarbeitet, auf Basis derer anschließend der Antrieb 42 entsprechend angesteuert wird. So könnte ein Parameter 48 die Geschwindigkeit bzw. die Fahrgeschwindigkeit 46 der landwirtschaftlichen Maschine 10 sein, ein weiterer Parameter 48 könnte der jeweilige Reihenabstand, d.h. der jeweilige Abstand zwischen zwei Reiheneinheiten 14 sein. Ebenso können als Parameter 48 Eigenschaften des Rotors 34 verwendet werden, d.h. dessen Durchmesser oder dessen Anzahl an Zinken 38 oder ob dieser einreihig oder mehrreihig aufgebaut ist. Auch könnte der Parameter 48 beinhalten, ob ein oder mehr Rotoren 34 vorhanden sind sowie, in welchem Winkel α und/oder β diese in der Reiheneinheit 14 angeordnet sind.

Ein weiterer Parameter 48 könnte die Bestandsdichte, welche sowohl Nutzpflanzen als auch Unkräuter beinhaltet, sein, so dass wiederum in Abhängigkeit des Bestandes die Drehrichtung und/oder Drehzahl 44 entsprechend variiert wird. Die Parameter 48 können manuell durch eine Bedienperson in einer Rechnereinheit 50 hinterlegt werden oder aber auch die Steuerung entsprechend konzeptioniert sein. Auch können verschiedenste Messmittel 52 an der landwirtschaftlichen Maschine 10 vorhanden sein, mittels derer die Parameter 48 erfasst werden. Neben den Parameter 48 kann die Rechnereinheit 50 auch mit einer Datenbank 88 verbunden sein und von dieser entsprechende Parameter 48 abrufen, ebenso kann die Rechnereinheit 50 mit einer entsprechenden Eingabevorrichtung 90 ausgestattet sein mittels derer wiederum Parameter 48 eingegeben werden können.

In einer Weiterbildung der Erfindung könnte vorgesehen sein, dass zusätzlich auf Basis der Parameter 48 und/oder in Abhängigkeit der Drehzahl und/oder Drehrichtung 44 auch der Winkel α und β und/oder die Arbeitstiefe der Rotoren 34 geändert wird.

Der Antrieb 42 kann sowohl als hydraulischer und/oder pneumatischer und/oder elektrischer Antrieb bzw. Motor ausgeführt sein, wobei die Drehzahl 44 bspw. durch eine Veränderung der Energiezufuhr, d.h. durch eine Erhöhung oder Verminderung eines Drucks oder einer Erhöhung oder Verminderung der zugeführten Leistung verändert werden kann. Auch können die Rotoren 34 der Reiheneinheiten 14 jeweils mit gleichen aber auch mit verschiedenen Drehzahlen 44 angetrieben werden.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Landwirtschaftliche Maschine
- 12: Pflanzenreihe
- 14: Reiheneinheit
- 16: Werkzeug
- 18: Rahmen
- 20: Anhängevorrichtung
- 22: Dreipunktanhängung
- 24: Fahrtrichtung
- 26: Tiefenführungselemente
- 28: Lochkulisse
- 30: Lockerungselemente
- 32: Federzinken
- 34: Rotor
- 36: Umfang
- 38: Zinken
- 40: Striegelelement
- 42: Antrieb
- 44: Drehzahl
- 46: Fahrgeschwindigkeit
- 48: Parameter
- 50: Rechnereinheit
- 52: Messmittel
- 54: Achse
- 56: Mittelteil
- 58: Seitenteil
- 60: Linearantrieb
- 62: Stahlelement
- 64: Zustreicher
- 66: Kufe
- 68: Abschnitt
- 70: Scharkörper
- 72: Schneide
- 74: Grundkörper
- 76: Lagerhülse
- 78: Abdeckblech
- 80: Montageelement
- 82: Zwischenblech
- 84: Flansch
- 86: Antriebswelle
- 88: Datenbank
- 90: Eingabevorrichtung

## Patentansprüche

1. Reiheneinheit (14) zur mechanischen Unkrautbekämpfung von in Pflanzenreihen (12) stehenden Kulturpflanzen, zumindest umfassend:
- ein neben der Pflanzenreihe (12) angeordnetes Lockerungselement (30),
- einen in einem Winkel α zur Pflanzenreihe (12) angeordneten Rotor (34),
- einen in einem Winkel β zur Pflanzenreihe (12) angeordneten Rotor (34),
**dadurch gekennzeichnet, dass** zumindest ein Rotor (34) mittels eines motorischen Antriebes (42) in Rotation gebracht wird, wobei die Drehzahl und/oder die Drehrichtung (44) dieses auf Basis verschiedenster Parameter (48) variabel veränderbar ist/sind.

2. Reiheneinheit (14) nach Anspruch 1, **dadurch gekennzeichnet, dass** jeweils links und rechts neben der Pflanzenreihe (12) ein Lockerungselement (30) angeordnet ist.

3. Reiheneinheit (14) nach Anspruch 1 oder 2, **dadurch gekennzeichnet, dass** das Lockerungselement (30) einen Scharkörper (70) aufweist, an dessen hinterem Ende eine Schneide (72) anschließt.

4. Reiheneinheit (14) nach Anspruch 1, **dadurch gekennzeichnet, dass** zumindest ein Rotor (34) mittig oder seitlich versetzt zur Pflanzenreihe (12) angeordnet ist.

5. Reiheneinheit (14) nach zumindest einem der vorhergehenden Ansprüche, **dadurch gekennzeichnet, dass** das zumindest eine Lockerungselement (30) und der zumindest eine Rotor (34) unterschiedliche Arbeitstiefen aufweisen.

6. Reiheneinheit (14) nach zumindest einem der vorhergehenden Ansprüche, **dadurch gekennzeichnet, dass** zumindest ein Rotor (34) wenigstens zwei Reihen von Zinken (38) aufweist.

7. Reiheneinheit (14) nach zumindest einem der vorhergehenden Ansprüche, **dadurch gekennzeichnet, dass** als Parameter (48) eine Geschwindigkeit und/oder eine Pflanzenbestandsdichte und/oder ein Wachstumsstadium und/oder ein Unkrautbefall und/oder ein Reihenabstand und/oder Eigenschaften des wenigstens einen Rotors (34) und/oder Positionsdaten und/oder der Winkel α und/oder die Arbeitstiefe des wenigstens einen Rotors (34) verwendet werden.

8. Reiheneinheit (14) nach zumindest einem der vorhergehenden Ansprüche, **dadurch gekennzeichnet, dass** der Winkel α und der Winkel β und/oder die Arbeitstiefe von wenigstens einem Rotor (34) variabel veränderbar ist/sind, wobei dies in Abhängigkeit verschiedenster Parameter (48) und/oder auf Basis einer Drehzahl und/oder Drehrichtung (44) erfolgen kann.

9. Reiheneinheit (14) nach zumindest einem der vorhergehenden Ansprüche, **dadurch gekennzeichnet, dass** dieser zumindest ein, neben der Pflanzenreihe (12) geführter Zustreicher (64) zugeordnet ist.

10. Landwirtschaftliche Maschine (10) zur mechanischen Unkrautbekämpfung von in Pflanzenreihen (12) stehenden Kulturpflanzen, umfassend zumindest:
- einen Rahmen (18), zum Tragen der jeweiligen Reiheneinheiten (14) und/oder Werkzeuge (16),
- ein Tiefenführungselement (26) zur konstanten Tiefenführung der Reiheneinheiten (14) und/oder Werkzeuge (16),
- zwei Reiheneinheiten (14), bestehend aus einem neben der Pflanzenreihe (12) angeordnetem Lockerungselement (30), sowie einen ersten in einem Winkel α zur Pflanzenreihe (12) angeordneten ersten Rotor (34), sowie einen zweiten in einem Winkel β zur Pflanzenreihe (12) angeordneten zweiten Rotor (34),
**dadurch gekennzeichnet, dass** zumindest ein Rotor (34) mittels eines motorischen Antriebes (42) in Rotation gebracht wird, wobei die Drehzahl und/oder die Drehrichtung (44) dieses auf Basis verschiedenster Parameter (48) variabel veränderbar ist.

11. Landwirtschaftliche Maschine (10) nach Anspruch 10, **dadurch gekennzeichnet, dass** jeweils links und rechts neben der Pflanzenreihe (12) ein Lockerungselement (30) angeordnet ist.

12. Landwirtschaftliche Maschine (10) nach Anspruch 10 oder 11, **dadurch gekennzeichnet, dass** das Lockerungselement (30) einen Scharkörper (70) aufweist, an dessen hinterem Ende eine Schneide (72) anschließt.

13. Landwirtschaftliche Maschine (10) nach Anspruch 10, **dadurch gekennzeichnet, dass** zumindest ein Rotor (34) mittig oder seitlich versetzt zur Pflanzenreihe (12) angeordnet ist.

14. Landwirtschaftliche Maschine (10) nach zumindest einem der Ansprüche 10 bis 13, **dadurch gekennzeichnet, dass** das zumindest eine Lockerungselement (30) und der zumindest eine Rotor (34) unterschiedliche Arbeitstiefen aufweisen.

15. Landwirtschaftliche Maschine (10) nach zumindest einem der Ansprüche 10 bis 14, **dadurch gekennzeichnet, dass** zumindest ein Rotor (34) wenigstens zwei Reihen von Zinken (38) aufweist.

16. Landwirtschaftliche Maschine (10) nach zumindest einem der Ansprüche 10 bis 15, **dadurch gekennzeichnet, dass** als Parameter (48) eine Geschwindigkeit und/oder eine Pflanzenbestandsdichte und/oder ein Wachstumsstadium und/oder ein Unkrautbefall und/oder ein Reihenabstand und/oder Eigenschaften des wenigstens einen Rotors (34) und/oder Positionsdaten und/oder der Winkel α und/oder der Winkel β und oder die Arbeitstiefe des wenigstens einen Rotors (34) verwendet werden.

17. Landwirtschaftliche Maschine (10) nach zumindest einem der Ansprüche 10 bis 16, **dadurch gekennzeichnet, dass** der Winkel α und/oder der Winkel β und/oder die Arbeitstiefe von wenigstens einem Rotor (34) variabel veränderbar ist, wobei dies in Abhängigkeit verschiedenster Parameter (48) und/oder auf Basis einer Drehzahl und/oder Drehrichtung (44) erfolgen kann/können.

18. Landwirtschaftliche Maschine (10) nach zumindest einem der Ansprüche 10 bis 17, **dadurch gekennzeichnet, dass** dieser zumindest ein, neben der Pflanzenreihe (12) geführter Zustreicher (64) zugeordnet ist.

19. Verfahren zur mechanischen Unkrautbekämpfung von in Pflanzenreihen (12) stehenden Kulturpflanzen zumindest umfassend die folgenden Schritte in beliebiger Reihenfolge:
- Lockern und aufbrechen des neben der Pflanzenreihe (12) befindlichen Ackerboden mittels wenigstens einem, neben der Pflanzenreihe (12) geführten Lockerungselement (30),
- Entfernen von sich zwischen den Kulturpflanzen der Pflanzenreihe (12) befindenden Unkraut und Ackerboden mittels zumindest einem in einem Winkel α zur Pflanzenreihe (12) angeordneten Rotor (34),
- anteilsmäßiges Zurückführen von Ackerboden in die Pflanzenreihe mittels zumindest einem in einem Winkel β zur Pflanzenreihe (12) angeordneten Rotor (34),
**dadurch gekennzeichnet, dass** zumindest ein Rotor (34) mittels eines motorischen Antriebes (42) in Rotation gebracht wird, wobei die Drehzahl und/oder die Drehrichtung (44) dieses auf Basis verschiedenster Parameter (48) variabel veränderbar ist.

20. Verfahren nach Anspruch 19, **dadurch gekennzeichnet, dass** als Parameter (48) eine Geschwindigkeit und/oder eine Pflanzenbestandsdichte und/oder ein Wachstumsstadium und/oder ein Unkrautbefall und/oder ein Reihenabstand und/oder Eigenschaften der wenigstens zwei Zinkenrotors (34) und/oder Positionsdaten und/oder der Winkel α und Winkel β und/ oder die Arbeitstiefe des wenigstens einen Rotors (34) verwendet werden.

21. Verfahren nach Anspruch 19 oder 20, **dadurch gekennzeichnet dadurch gekennzeichnet, dass** der Winkel α und Winkel β und/oder die Arbeitstiefe von wenigstens einem Rotor (34) variabel veränderbar ist, wobei diese in Abhängigkeit verschiedenster Parameter (48) und/oder auf Basis einer Drehzahl und/oder Drehrichtung (44) erfolgen kann.
